(19) 

Europäisches Patentamt
European Patent Office
Office européen des brevets

(11) **EP 3 989 085 A1**

(12) **EUROPEAN PATENT APPLICATION**

(43) Date of publication:
**27.04.2022 Bulletin 2022/17**

(21) Application number: **21181409.0**

(22) Date of filing: **24.06.2021**

(51) International Patent Classification (IPC):
*G06F 17/11* (2006.01)     *G06N 5/00* (2006.01)
*G06N 7/00* (2006.01)     *G06F 30/23* (2020.01)

(52) Cooperative Patent Classification (CPC):
**G06F 17/11; G06F 30/20; G06F 30/23;**
**G06N 5/003; G06N 7/005;** G06F 2111/10

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **22.10.2020   JP 2020177379**

(71) Applicant: **FUJITSU LIMITED**
**Kanagawa 211-8588 (JP)**

(72) Inventors:
• **Maruo, Akito**
  **Kawasaki-shi, Kanagawa, 211-8588 (JP)**
• **Soeda, Takeshi**
  **Kawasaki-shi, Kanagawa, 211-8588 (JP)**

(74) Representative: **Hoffmann Eitle**
**Patent- und Rechtsanwälte PartmbB**
**Arabellastraße 30**
**81925 München (DE)**

(54) **OPTIMIZATION DEVICE, OPTIMIZATION METHOD, AND OPTIMIZATION PROGRAM**

(57) An optimization device of optimizing a shape of an object, the optimization device being configured to perform an optimization processing, the optimization processing including: obtaining an objective function equation based on a contribution to a predetermined characteristic of the object in each element of a plurality of elements, each of the plurality of elements being an element obtained by dividing the object arranged in a design region; and optimizing the shape of the object by determining, for the each element of the object, whether to arrange the each element of the object based on the obtained objective function equation.

FIG. 4

EP 3 989 085 A1

**Description**

FIELD

The present case discussed herein is related to an optimization device, an optimization method, and an optimization program.

BACKGROUND

In recent years, computer aided engineering (CAE) analysis has been applied to design of various products (devices, equipment, and the like). The CAE analysis is a general term for simulation technology that enables virtual experiments by performing numerical calculations that impose various conditions on a product modeled on a computer using computer aided design (CAD) or the like.

By performing the CAE analysis, the shape of the product and the like can be optimized without actually manufacturing the product, and the product can be efficiently designed.

An example of prior art for optimizing the shape of a product using the CAE analysis includes a technique called parameter optimization in which a person who designs the product sets parameters (design variables) that can uniquely determine the shape of the product, and the parameters are used for optimization, for example. In the parameter optimization, which is an example of the prior art, the shape of the product may be limited due to the nature of the set parameters (a radius of a circle, a length of each side of a polygon, and the like), and sufficient optimization may not be performed. Moreover, in the parameter optimization, which is an example of the prior art, the CAE analysis is performed for each set value of the set parameters and so a large number of CAE analyzes need to be performed, and there is a problem of a high calculation cost.

Furthermore, an example of a technique of performing optimization without using the above-described parameters (design variables) that can uniquely determine the shape of the product includes a technique called topology optimization, for example. In the topology optimization, the shape of the product is not limited by the nature of the parameters (design variables), so the shape of the product can be optimized with a higher degree of freedom than the parameter optimization.

Here, the topology optimization can be classified according to a technique of expressing the shape of the product and can be classified into, for example, continuous topology optimization and discrete topology optimization.

The continuous topology optimization (density method or level set method) is a technique of optimizing the shape of the product by representing the shape and the like of the product with continuous values and performing a differential search.

For the continuous topology optimization, a technology of repeating dividing a design region of an object by elements, deriving a physical amount of a shape of a field by a finite element method, deriving a target function and its sensitivity, and solving a reaction diffusion equation until the target function converges has been proposed.

In such continuous topology optimization, the shape of the searched product may be limited to a local solution, and there is a problem that the range of the searchable shape is narrow. Moreover, the continuous topology optimization, which is an example of the prior art, needs a large number of CAE analyses in the optimization process, and has a problem of a high calculation cost.

The discrete topology optimization (on-off method) is a technique of optimizing the shape of the product by representing the shape of a product as discrete values (for example, "1" or "0"), and searching for whether to arrange a material in a divided region of the product for all of combinations of the discrete values. The discrete topology optimization, which is an example of the prior art, has a wider range of searchable shapes than the continuous topology optimization but needs an enormous number of CAE analyses because a CAE analysis is performed for each combination of an enormous number of discrete values, and has a problem of a very high calculation cost.

As described above, in the prior art, when optimizing and designing the shape of a product (an object to be designed such as a device or equipment) using the CAE analysis, the searchable shape is limited and the shape may not be able to be sufficiently optimized. Moreover, in the prior art, since a large number of CAE analyses need to be repeated, the calculation cost becomes high, and optimization of the shape of the product in a realistic time has been sometimes difficult.

An example of the related art includes Japanese Laid-open Patent Publication No. 2010-108451.

SUMMARY

TECHNICAL PROBLEM

In one aspect, an object of the present case is to provide an optimization device and the like capable of optimizing the shape of an object sufficiently and in a short time.

SOLUTION TO PROBLEM

According to an aspect of the embodiments, there is provided an optimization device that optimizes a shape of an object, the optimization device including an optimization processing unit configured to: obtain an objective function equation based on a contribution to a predetermined characteristic of the object in each element of a plurality of elements, each of the plurality of elements being an element obtained by dividing the object arranged in a design region; and optimize the shape of the object by determining, for the each element of the object, whether to arrange the each element of the object based on the obtained objective function equation.

The object and advantages of the invention will be realized and attained by means of the elements and combinations particularly pointed out in the claims.

It is to be understood that both the foregoing general description and the following detailed description are exemplary and explanatory and are not restrictive of the invention.

ADVANTAGEOUS EFFECTS OF INVENTION

In one aspect, the present case can provide an optimization device and the like capable of optimizing the shape of an object sufficiently and in a short time.

BRIEF DESCRIPTION OF DRAWINGS

FIG. 1A is a diagram illustrating an example of the length of each side in a case of specifying the length of each side of a triangle as a parameter in parameter optimization;
FIG. 1B is a diagram illustrating another example of the length of each side in a case of specifying the length of each side of a triangle as a parameter in parameter optimization;
FIG. 2 is a diagram illustrating an example of a bit map representing a shape of an object in discrete topology optimization;
FIG. 3 is a diagram illustrating an example of a state when a combination of bits that give a minimum value to an Ising model equation in a quadratic unconstrained binary optimization (QUBO) format is searched;
FIG. 4 is a diagram illustrating an example of a hardware configuration of an optimization device disclosed in the present case;
FIG. 5 is a diagram illustrating another example of the hardware configuration of the optimization device disclosed in the present case;
FIG. 6 is a diagram illustrating an example of a functional configuration of the optimization device disclosed in the present case;
FIG. 7 is a flowchart illustrating an example of a flow when optimizing the shape of an object, using an example of the technology disclosed in the present case;
FIG. 8 is a diagram illustrating an example of a functional configuration of an annealing machine used for an annealing method;
FIG. 9 is a diagram illustrating an example of an operation flow of a transition control unit;
FIG. 10 is a diagram illustrating an example of a calculation model when optimizing the shape of a magnetic shield in Example 1;
FIG. 11 is a graph illustrating an example of a BH curve (hysteresis curve) for a magnetic material forming the magnetic shield, which is set in Example 1;
FIG. 12A is a diagram for describing an example of a flow when obtaining magnetic flux density in each element by dividing the calculation model in Example 1 and performing an analysis by a finite element method;
FIG. 12B is a diagram for describing an example of the flow when obtaining magnetic flux density in each element by dividing the calculation model in Example 1 and performing an analysis by a finite element method;
FIG. 12C is a diagram for describing an example of the flow when obtaining magnetic flux density in each element by dividing the calculation model in Example 1 and performing an analysis by a finite element method;
FIG. 13 is a diagram illustrating an example of a distribution of the magnetic flux density in the design region under a condition that the magnetic material as the material of the magnetic shield is arranged in the entire design region in Example 1;
FIG. 14 is a diagram illustrating an example of each element obtained by dividing the magnetic shield in the design region under the condition that the magnetic material as the material of the magnetic shield is arranged in the entire design region in Example 1;

Fig. 15 is a diagram illustrating, as an initial shape in optimization in Example 1, an example of the shape of the magnetic shield when setting the condition that the magnetic material as the material of the magnetic shield is arranged in the entire design region;

FIG. 16A is a diagram illustrating an example of the shape of the magnetic shield before filtering in the first optimization in Example 1;

FIG. 16B is a diagram illustrating an example of the shape of the magnetic shield after filtering in the first optimization in Example 1;

FIG. 17A is a diagram illustrating an example of the shape of the magnetic shield before filtering in the second optimization in Example 1;

FIG. 17B is a diagram illustrating an example of the shape of the magnetic shield after filtering in the second optimization in Example 1;

FIG. 18A is a diagram illustrating an example of the shape of the magnetic shield before filtering in the third optimization in Example 1;

FIG. 18B is a diagram illustrating an example of the shape of the magnetic shield after filtering in the third optimization in Example 1;

FIG. 19A is a diagram illustrating an example of the shape of the magnetic shield before filtering in the fourth optimization in Example 1;

FIG. 19B is a diagram illustrating an example of the shape of the magnetic shield after filtering in the fourth optimization in Example 1;

FIG. 20A is a diagram illustrating an example of the shape of the magnetic shield before filtering in the fifth optimization in Example 1;

FIG. 20B is a diagram illustrating an example of the shape of the magnetic shield after filtering in the fifth optimization in Example 1;

FIG. 21A is a diagram illustrating an example of the shape of the magnetic shield before filtering in the sixth optimization in Example 1;

FIG. 21B is a diagram illustrating an example of the shape of the magnetic shield after filtering in the sixth optimization in Example 1;

FIG. 22A is a diagram illustrating an example of the shape of the magnetic shield before filtering in the seventh optimization in Example 1;

FIG. 22B is a diagram illustrating an example of the shape of the magnetic shield after filtering in the seventh optimization in Example 1;

FIG. 23A is a diagram illustrating an example of the shape of the magnetic shield before filtering in the eighth optimization in Example 1;

FIG. 23B is a diagram illustrating an example of the shape of the magnetic shield after filtering in the eighth optimization in Example 1;

FIG. 24A is a diagram illustrating an example of the shape of the magnetic shield before filtering in the ninth optimization in Example 1;

FIG. 24B is a diagram illustrating an example of the shape of the magnetic shield after filtering in the ninth optimization in Example 1;

FIG. 25A is a diagram illustrating an example of the shape of the magnetic shield before filtering in the tenth optimization in Example 1;

FIG. 25B is a diagram illustrating an example of the shape of the magnetic shield after filtering in the tenth optimization in Example 1;

FIG. 26A is a diagram illustrating an example of the shape of the magnetic shield before filtering in the eleventh optimization in Example 1;

FIG. 26B is a diagram illustrating an example of the shape of the magnetic shield after filtering in the eleventh optimization in Example 1;

FIG. 27A is a diagram illustrating an example of the shape of the magnetic shield before filtering in the twelfth optimization in Example 1;

FIG. 27B is a diagram illustrating an example of the shape of the magnetic shield after filtering in the twelfth optimization in Example 1;

FIG. 28A is a diagram illustrating an example of the shape of the magnetic shield before filtering in the thirteenth optimization in Example 1;

FIG. 28B is a diagram illustrating an example of the shape of the magnetic shield after filtering in the thirteenth optimization in Example 1;

FIG. 29A is a diagram illustrating an example of the shape of the magnetic shield before filtering in the fourteenth optimization in Example 1;

FIG. 29B is a diagram illustrating an example of the shape of the magnetic shield after filtering in the fourteenth optimization in Example 1;

Fig. 30A is a diagram illustrating an example of the shape of the magnetic shield when setting the condition that the magnetic material as the material of the magnetic shield is arranged in the entire design region in Example 1;

Fig. 30B is a diagram illustrating an example of lines of magnetic force by magnetism generated by a coil in the shape of the magnetic shield when setting the condition that the magnetic material as the material of the magnetic shield is arranged in the entire design region in Example 1;

FIG. 31A is a diagram illustrating an example of an optimization result of the shape of the magnetic shield in a case of $\alpha$ = 0.95 and $\beta$ = 0.05 in Example 1;

FIG. 31B is a diagram illustrating an example of lines of magnetic force by magnetism generated by a coil in the shape of the optimization result of the magnetic shield in the case of $\alpha$ = 0.95 and $\beta$ = 0.05 in Example 1;

FIG. 32A is a diagram illustrating an example of an optimization result of the shape of the magnetic shield in a case of $\alpha$ = 0.5 and $\beta$ = 0.5 in Example 2;

FIG. 32B is a diagram illustrating an example of lines of magnetic force by magnetism generated by a coil in the shape of the optimization result of the magnetic shield in the case of $\alpha$ = 0.5 and $\beta$ = 0.5 in Example 2;

FIG. 33A is a diagram illustrating an example of an optimization result of the shape of the magnetic shield in a case of $\alpha$ = 0.7 and $\beta$ = 0.3 in Example 3;

FIG. 33B is a diagram illustrating an example of lines of magnetic force by magnetism generated by a coil in the shape of the optimization result of the magnetic shield in the case of $\alpha$ = 0.7 and $\beta$ = 0.3 in Example 3;

FIG. 34A is a diagram illustrating an example of an optimization result of the shape of the magnetic shield in a case of $\alpha$ = 0.8 and $\beta$ = 0.2 in Example 4;

FIG. 34B is a diagram illustrating an example of lines of magnetic force by magnetism generated by a coil in the shape of the optimization result of the magnetic shield in the case of $\alpha$ = 0.8 and $\beta$ = 0.2 in Example 4;

FIG. 35A is a diagram illustrating an example of an optimization result of the shape of the magnetic shield in a case of $\alpha$ = 0.99 and $\beta$ = 0.01 in Example 5;

FIG. 35B is a diagram illustrating an example of lines of magnetic force by magnetism generated by a coil in the shape of the optimization result of the magnetic shield in the case of $\alpha$ = 0.99 and $\beta$ = 0.01 in Example 5;

FIG. 36 is a graph illustrating an example of a relationship between a mean square of the magnetic flux density in an object region and an area of the magnetic material (magnetic material area) in Examples 1 to 5; and

FIG. 37 is a diagram illustrating an example of a flow of processing in one embodiment of the technology disclosed in the present case.


DESCRIPTION OF EMBODIMENTS

(Optimization Device)

The technology disclosed in the present case is based on the findings of the present inventors that the shape of an object cannot be optimized sufficiently and in a short time by the prior art. Therefore, before describing details of the technology disclosed in the present case, problems and the like of the prior art will be specifically described.

First, as described above, in the parameter optimization, when optimizing the shape of an object (device, equipment, or the like), a person who designs the object sets parameters (design variables) that uniquely determine the shape of the object, and performs the optimization on the basis of the parameters, for example. Examples of the parameters to be set in the parameter optimization include a radius of a circle, a length of each side of a polygon, an angle between sides, and the like, for example.

Here, in the parameter optimization, when specifying the radius of a circle as a parameter when representing the shape of the object by the parameter, the shape of the object to be optimized is limited to the circle. Similarly, in the parameter optimization, when specifying a length of each side of a triangle as a parameter, the shape of the object to be optimized is limited to the triangle.

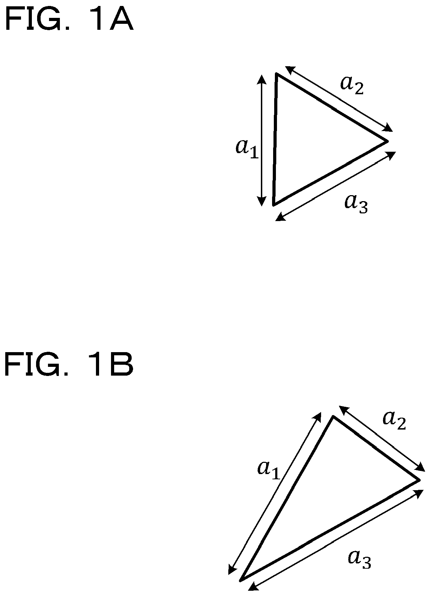

More specifically, in the case of specifying the length of each side of a triangle as a parameter in the parameter optimization, consider a case where the lengths of sides of the triangle before optimization are $a_1$, $a_2$, and $a_3$ illustrated in FIG. 1A, for example. In this case, it is assumed that a result of the parameter optimization is the lengths $a_1$, $a_2$, and $a_3$ of the sides of the triangle as illustrated in FIG. 1B.

In the example illustrated in FIGs. 1A and 1B, the lengths $a_1$, $a_2$, and $a_3$ of the sides of the triangle can be optimized by performing the parameter optimization but the shape of the object is limited to a triangle, and it has not been possible to search for cases of shapes other than triangles. In this way, in the parameter optimization, the shape of the object is limited due to the nature of the set parameter, and sufficient optimization may not be performed.

Moreover, when optimizing the shape of the object using the parameter optimization, a CAE analysis (for example, an analysis of performance of the object, or the like) using the value of the set parameter needs to be performed each time the value of the parameter is changed. Therefore, in the case of optimizing the shape of the object using the parameter optimization, the CAE analysis is performed for each set value of the set parameter and so a large number of CAE analyzes need to be performed, and there is a problem of a high calculation cost.

Furthermore, as described above, in the continuous topology optimization (density method or level set method), the shape of the object is represented by a function using a continuous value or the like and is optimized by performing a differential search without using the parameters (design variables) that uniquely determine the shape of the object. In this way, since the continuous topology optimization is the optimization technique using a differential search, the optimization result depends on an initial set value (an initial value of the function using a continuous value). Therefore, in the continuous topology optimization, the shape of the object searched by performing the optimization may be limited (trapped) to a local solution, and there is a problem that the range of the searchable shape is narrow.

When optimizing the shape of the object by the continuous topology optimization, the CAE analysis is performed for each of the shapes obtained in the optimization process, so a large number of CAE analyses are needed and there is a problem of a high calculation cost.

In addition, as described above, in the discrete topology optimization (on-off method), the shape of the object is represented by discrete values, and whether to arrange the material in each divided region of the object is searched for all the combinations of the discrete values. When representing the shape of the object with the discrete values in the discrete topology optimization, for example, whether to arrange the material in each divided region of the object is represented using "1 (to arrange)" or "0 (not to arrange)".

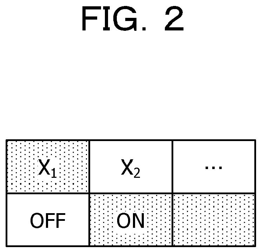

More specifically, in the discrete topology optimization, "$x_i = 1$" is the case (on) where the material (substance) is arranged in the i-th region, and "$x_i = 0$" is the case (off) where the material is not arranged in the i-th region. In this case, in the discrete topology optimization, the shape of the object can be expressed by a map (bitmap) of bits of "1" and "0", as illustrated in FIG. 2.

In this way, in the discrete topology optimization, the shape of the object is expressed by a combination of the discrete values, and the shape is searched for all the combinations of the discrete values (a combination optimization problem is solved), so that the shape can be searched in a wider range than the continuous topology optimization.

However, in the discrete topology optimization, when searching for the shape for all the combinations of the discrete values representing the shape of the object, the CAE analysis needs to be performed for each combination of an enormous number of the discrete values (for each of shapes that the object can take), for example. Therefore, in the discrete topology optimization, an enormous number of CAE analyses needs to be performed for the respective combinations of an enormous number of discrete values, and there is a problem of a very high calculation cost.

As described above, in the prior art, when optimizing the shape of the object, the search range of the shape of the object is limited and the search becomes insufficient, or the optimization takes time due to the high calculation cost, and the optimization of the shape of the object in a realistic time has been sometimes difficult.

Therefore, the present inventors have earnestly studied a device and the like capable of optimizing the shape of an object sufficiently and in a short time, and have obtained the following findings.

That is, the present inventors have found that the shape of the object can be optimized sufficiently and in a short time by the following optimization device and the like.

An optimization device as an example of the technology disclosed in the present case is an optimization device that optimizes a shape of an object, the optimization device including:

an optimization processing unit configured to specify the shape of the object by using an objective function equation based on a contribution to a predetermined characteristic of the object in each element of a plurality of elements obtained by dividing the object to be arranged in a design region, and

specifying, for the each element of the object, whether to arrange the each element of the object.

Here, in an example of the technology disclosed in the present case, the shape of the object is optimized by specifying the shape of the object using the objective function equation based on a contribution to a predetermined characteristic of the object in each element of a plurality of elements obtained by dividing the object arranged (to be arranged) in a design region.

In an example of the technology disclosed in the present case, for the object for which the shape is to be optimized, the object is divided into the plurality of elements by arranging the object in the design region and dividing the object. In other words, in an example of the technology disclosed in the present case, the plurality of elements that is divided objects to be arranged in the design region that is a region in which the object can be arranged is obtained by dividing the design region into the plurality of elements. That is, in an example of the technology disclosed in the present case, the design region of the object is divided into the plurality of elements, and the plurality of elements as a set represents the design region of the object.

Then, in an example of the technology disclosed in the present case, the shape of the object is optimized by specifying the shape of the object using the objective function equation based on the contribution to a predetermined characteristic of the object in each element of the plurality of elements obtained by dividing the object. In other words, in an example of the technology disclosed in the present case, for the elements obtained by dividing the object, the objective function equation based on the contributions of the respective elements for the predetermined characteristic in the object is constructed, and the shape of the object is specified and optimized on the basis of the constructed objective function equation.

The predetermined characteristic of the object can be, for example, a characteristic related to performance of the object. As the characteristic related to performance of the object, for example, a characteristic in which the performance is changed depending on the shape of the object can be appropriately selected according to use of the object or the like.

More specifically, in a case where the object is a magnetic shield, as will be described below in examples and the like, the predetermined characteristic of the object can be, for example, shielding performance of a magnetic flux for a region (object region) in which the magnetism is desired to be shielded, in the magnetic shield. In this example, for example, to optimize the shape of the magnetic shield (to determine an element in which a material (magnetic material) of the magnetic shield is arranged), an objective function equation that can consider the shielding performance of the magnetic flux for the region where the magnetism is desired to be shielded (an example of the predetermined characteristic) and other conditions is used.

Note that the objective function equation (objective function) can be a function that takes a minimum value, for example, when variables in the objective function equation are in an optimum combination in a combination optimization problem. Therefore, by searching for the combination of variables that minimizes the objective function equation (minimizing the objective function equation), the solution of the combination optimization problem can be searched, and the shape of the object can be optimized.

Furthermore, in an example of the technology disclosed in the present case, the contribution to the predetermined characteristic of the object can be, for example, a physical amount representing the degree of influence (influence degree) on the predetermined characteristic as described above. That is, in an example of the technology disclosed in the present case, as the contribution, a physical amount in the object that affects the performance of the object can be used, for example.

More specifically, in the case where the object is the magnetic shield and the predetermined characteristic is the shielding performance of the magnetic flux, the contribution to the predetermined characteristic of the object can be a magnetization vector of each element in the magnetic shield. In this example, for example, the shape with optimized shielding performance of the magnetic flux can be specified by optimizing the shape of the magnetic shield using the objective function equation based on the magnetization vector in each element obtained by dividing the magnetic shield.

Moreover, in an example of the technology disclosed in the present case, for example, the shape of the object can be optimized in consideration of another condition (constraint) by adding the another condition to the objective function equation in addition to the contribution as described above.

Then, in an example of the technology disclosed in the present case, the shape of the object is optimized by specifying whether to arrange each element of the object, for each element of the object, using the objective function equation based on the contribution as described above. In other words, in an example of the technology disclosed in the present case, the optimization can be performed by specifying the shape of the object to improve the predetermined characteristic by specifying whether to arrange each element of the object for the design region on the basis of the contribution to the predetermined characteristic of the object.

Here, in an example of the technology disclosed in the present case, since whether to arrange each element of the object is specified on the basis of the objective function equation, the shape of the object can be searched in a wide range in consideration of all the combinations that can arrange each element in the design region. That is, in an example of the technology disclosed in the present case, since arrangement of each element of the object can discretely represented and the shape can be searched, the shape of the object can be sufficiently searched in a wide range without being affected by the nature of the parameters representing the shape or the initial value of the function.

Moreover, in an example of the technology disclosed in the present case, since the shape of the object is optimized using the objective function equation based on the contribution to the predetermined characteristic of the object as described above, the shape of the object can be efficiently optimized to improve the predetermined characteristic in consideration of the contribution. That is, in an example of the technology disclosed in the present case, for example, the direction of the optimization (optimization guideline) of the shape of the object can be determined so as to improve the predetermined characteristic, for example, in consideration of the contribution as the physical amount that represents the degree of influence on the predetermined characteristic of the object (performance of the object).

Further, in an example of the technology disclosed in the present case, as the contribution used in the objective function equation, a prespecified contribution may be used or a newly specified contribution may be used. In the case of using the newly specified contribution, an example of a technique of specifying the contribution includes a technique of specifying the contribution by performing the CAE analysis that can obtain the physical amount in the object, which affects the performance of the object.

In an example of the technology disclosed in the present case, since the direction of optimization of the shape of the object can be determined so as to improve the predetermined characteristic, as described above, the number of CAE analyses for specifying the contribution can be reduced even in the case of performing the CAE analysis when specifying the contribution. In other words, in an example of the technology disclosed in the present case, for example, since the shape can be efficiently searched so as to improve the predetermined characteristic on the basis of the contribution, the number of times of performing the CAE analysis can be suppressed even in a case of updating the contribution by the CAE analysis.

As described above, in an example of the technology disclosed in the present case, the number of times of the CAE analysis needed in optimizing the shape of the object can be reduced and the optimization can be performed in a short time even in the case of obtaining the contribution to the predetermined characteristic of the object by performing the CAE analysis or the like.

As described above, in an example of the technology disclosed in the present case, for example, when optimizing the shape of the object (device, equipment, or the like), whether to arrange each element of the plurality of elements obtained by dividing the object is specified using the objective function equation based on the contribution to the predetermined characteristic of the object. Therefore, in the technology disclosed in the present case, the shape of the object can be optimized sufficiently and in a short time.

In the following description, an example of the technology disclosed in the present case will be described with reference to the drawings. Note that the processing (operation) such as optimizing the shape of the object in the optimization device as an example of the technology disclosed in the present case can be performed by an optimization processing unit included in the optimization device, for example.

Here, the optimization device disclosed in the present case favorably has a contribution specifying unit, and may further have another unit (means) if needed. Note that the optimization processing unit can be implemented by, for example, a combination of a processor such as a central processing unit (CPU) and a memory such as a random access memory (RAM), or as a part of an annealing machine.

First, the optimization device as an example of the technology disclosed in the present case can be an optimization device that optimizes the shape of the object.

Here, the object for which the shape is to be optimized using an example of the technology disclosed in the present case is not particularly limited as long as the predetermined characteristic changes according to the shape, and the contribution to the predetermined characteristic can be specified, and can be appropriately selected according to the purpose. As the object, for example, an object with a shape that can be optimized by a known topology optimization can be appropriately selected and applied.

Specific examples of the object include magnetic shields, machine parts, heat insulating materials, light shielding members, soundproofing materials, vibration damping materials, waveproofing materials, and the like to be described in Examples below, for example.

Furthermore, in an example of the technology disclosed in the present case, the shape of the object to be optimized may be a two-dimensional shape or a three-dimensional shape. In an example of the technology disclosed in the present case, it is favorable to optimize (search for) the two-dimensional shape of the object because the shape can be optimized in a shorter time, for example. Furthermore, when optimizing the two-dimensional shape of the object, the optimization may be performed under a condition that each element obtained by dividing the object to be arranged in the design region is thickened.

<Optimization Processing Unit>

The optimization device as an example of the technology disclosed in the present case has, as described above, the optimization processing unit that specifies the shape of the object using the objective function equation based on the contribution to the predetermined characteristic of the object in each element of the plurality of elements obtained by dividing the object to be arranged in the design region. Moreover, the optimization processing unit optimizes the shape of the object by specifying, for each element of the object, whether to arrange the each element of the object.

In an example of the technology disclosed in the present case, the optimization processing unit specifies and optimizes the shape of the object, using the objective function equation. Here, the objective function equation can be, for example, a function that takes the minimum value when variables in the objective function equation are in an optimum combination in a combination optimization problem on the basis of conditions or constraints in the combination optimization problem. Therefore, by searching for the combination of variables that minimizes the objective function equation (minimizing the objective function equation), the solution of the combination optimization problem can be searched, and the shape of the object can be optimized. Note that the objective function may also be referred to as an energy function, a cost function, a Hamiltonian, or the like.

In an example of the technology disclosed in the present case, the objective function equation based on the contribution to a predetermined characteristic of the object in each element of the plurality of elements obtained by dividing the object to be arranged in the design region is used.

Furthermore, the "dividing the object to be arranged in the design region" means virtually dividing the region (design region) in which the object can be arranged when designing the object with the optimized shape.

The division method when dividing the object is not particularly limited and can be appropriately selected depending on a purpose. As the division method when dividing the object, for example, it is favorable to divide the object such that each element is formed into a shape suitable for an analysis by numerical calculation (for example, a finite element method) to be described below.

For example, the number of divisions (number of elements) when dividing the object can be appropriately selected according to the number of bits that can be used by a computer (for example, annealing machine) used to optimize the objective function equation, requested calculation accuracy, a size of the object that can be actually manufactured, or the like.

Here, as the contribution to the predetermined characteristic of the object in each element of the plurality of elements obtained by dividing the object to be arranged in the design region, the prespecified contribution may be used, or the newly specified contribution may be used. However, use of the newly specified contribution is favorable.

<Contribution Specifying Unit>

The technique of specifying the contribution is not particularly limited as long as the contribution to the predetermined characteristic can be specified for each element of the object, and can be appropriately selected according to the purpose, but it is favorable to specify the contribution by the contribution specifying unit to be described below.

The contribution specifying unit can be a unit (means) for specifying a distribution of the physical amounts related to the predetermined characteristic by performing an analysis using numerical calculation for the object to be arranged in the design region. That is, in an example of the technology disclosed in the present case, it is favorable to further include the contribution specifying unit that specifies the contribution in each element of the object by specifying a distribution of the physical amounts related to the predetermined characteristic by performing an analysis using numerical calculation for the object to be arranged in the design region. Note that the contribution specifying unit can be implemented by, for example, a combination of a processor such as a CPU and a memory such as a RAM.

As the analysis using numerical calculation for the object to be arranged in the design region performed by the contribution specifying unit, for example, the above-described CAE analysis can be used. The analysis (CAE analysis) using numerical calculation is not particularly limited as long as the contribution can be specified and can be appropriately selected according to the purpose, but is favorably an analysis using the finite element method. In other words, in an example of the technology disclosed in the present case, it is favorable that the contribution specifying unit specifies the contribution in each element of the object by performing an analysis using the finite element method.

In the finite element method (FEM), for example, a region to be analyzed is divided into a large number of small regions called elements (mesh), and potentials defined at nodes and sides of each small region are approximated by a simple equation to createsimultaneous linear equations, and a potential distribution and the like are obtained by solving the simultaneous linear equations. Therefore, by using the finite element method, a differential equation that is difficult to solve analytically can be solved, simulations for various objects can be performed with high accuracy, and the contribution can be more accurately specified.

Note that the analysis using the finite element method can be performed using known analysis simulation software.

The contribution specifying unit specifies the distribution of physical amounts related to the predetermined characteristic of the object by performing an analysis using numerical calculation (for example, an analysis by the finite element method).

Here, the physical amount related to the predetermined characteristic of the object (for example, the characteristic related to the performance of the object) is not particularly limited as long as the physical amount affects the predetermined characteristic and can be appropriately selected according to the purpose. Examples of the physical amounts related to the predetermined characteristic of the object include, for example, a magnetic flux density distribution in an electromagnetic field analysis, a stress distribution in a structure analysis, a temperature distribution in a thermal analysis, a light intensity distribution in an optical analysis, a sound magnitude distribution in a sound analysis (acoustic analysis), a vibration distribution in a vibration analysis, a wave distribution in an analysis of liquid wave, and the like. Note that, hereinafter, the distribution of physical amounts specified by the contribution specifying unit may be referred to as "field distribution".

In addition, the contribution in each element of the object, which is specified by the contribution specifying unit specifying the distribution of the physical amounts, is not particularly limited as long as the contribution is a physical amount that affects the predetermined characteristic of the object specified on the basis of the distribution of the physical amounts, and can be appropriately selected according to the purpose. Specific examples of the contribution specified by the contribution specifying unit include a magnetization vector in an electromagnetic field analysis, a load vector in a structure analysis, a calorific value in a thermal analysis, the light intensity of each element in an optical analysis, the magnitude of sound of each element in a sound analysis (acoustic analysis), the magnitude of vibration of each element in a vibration analysis, the magnitude of wave of each element in an analysis of liquid wave, and the like, for example.

Furthermore, in an example of the technology disclosed in the present case, it is favorable to repeat the optimization of the shape of the object and the update of the contribution based on the result of the optimization. By doing so, the shape of the object can be optimized using the objective function equation based on a more appropriate contribution, and a more appropriate shape of the object can be obtained.

More specifically, it is favorable that the contribution specifying unit updates the contribution in each element of the object on the basis of a specific result as to whether to arrange the each element of the object, and the optimization processing unit specifies the shape of the object, using the objective function equation based on the updated contribution. As described above, in an example of the technology disclosed in the present case, by repeatedly performing processing of the contribution specifying unit and the optimization processing unit, a more appropriate shape can be gradually searched, and a more sufficiently optimized shape of the object can be specified in the end.

In an example of the technology disclosed in the present case, in the case of repeatedly performing the processing of the contribution specifying unit and the optimization processing unit, the condition for repeating the processing (the number of repetitions) is not particularly limited and can be appropriately selected according to the purpose. In the case of repeatedly performing the processing of the contribution specifying unit and the optimization processing unit, the condition for repeating the processing is favorably repeating the processing until a change in the minimum value of the objective function equation used for optimization becomes equal to or less than a predetermined value, for example.

In other words, in an example of the technology disclosed in the present case, it is favorable that the update of the contribution in the contribution specifying unit and the optimization using the objective function equation on the basis of the updated contribution in the optimization processing unit are repeated until the change in the minimum value of the objective function equation becomes equal to or less than a predetermined value. By doing so, the contribution in the objective function equation is more sufficiently optimized, and a more sufficiently optimized shape of the object can be specified. Note that the determination that the change in the minimum value of the objective function equation is equal to or less than the predetermined value can be made by, for example, a comparison with an immediately preceding calculation result (a comparison between an (n + 1)th calculation result and an n-th calculation result).

Furthermore, as the condition for repeating the processing, the maximum number of calculations (the number of cycles) is determined, and the shape specified on the basis of the objective function equation having the lowest minimum value among the number of calculations may be specified as a final optimization result.

Here, in an example of the technology disclosed in the present case, the optimization processing unit specifies the shape of the object by specifying whether to arrange each element of the object, for each element of the object, using the objective function equation. In other words, in an example of the technology disclosed in the present case, since whether to arrange each element of the object is specified by solving a combination optimization problem on the basis of the objective function equation, the shape of the object can be searched in a wide range in consideration of all the combinations that can arrange each element in the design region.

Furthermore, an example of a technique capable of solving the combination optimization problem based on the objective function equation at high speed includes a technique of performing calculation by an annealing method (annealing), for example.

To efficiently minimize the objective function at high speed by the annealing method (annealing), there is a case where it is needed for the objective function to be expressed by a quadratic unconstrained binary optimization (QUBO) format. Here, the QUBO format means a format in which the objective function to be maximized or minimized with respect to a variable that may be only two values such as zero or one can be expressed up to the second-order term and a range of a variable space is not explicitly limited.

In the annealing method, for example, the objective function expressed in the QUBO format is converted into a format called the Ising model and the value of the objective function converted into the Ising model is minimized so as to solve the combination optimization problem.

An equation (Ising model equation) obtained by converting the objective function in the QUBO format into the Ising model, for example, can be the Ising model equation in the QUBO format represented by the following equation.

$$E(s) = -\sum_{i,j=0} w_{ij} s_i s_j - \sum_{i=0} b_i s_i + const.$$

However, in the above-described equation, E (s) is the objective function meaning that minimization solves the combination optimization problem.

The $w_{ij}$ is a coefficient (weight) for weighting between an i-th element (bit) and a j-th element (bit).

The $s_i$ is a binary variable that represents that the i-th element (bit) is zero or one, and the $s_j$ is a binary variable that represents that the j-th element (bit) is zero or one.

The $b_i$ is a numerical value that represents a bias with respect to the i-th element (bit).

The const. is a constant.

In the annealing method, for example, while variously changing each bit (element) in the Ising model equation in the QUBO format described above, the minimum value of the Ising model equation can be efficiently searched in a short time.

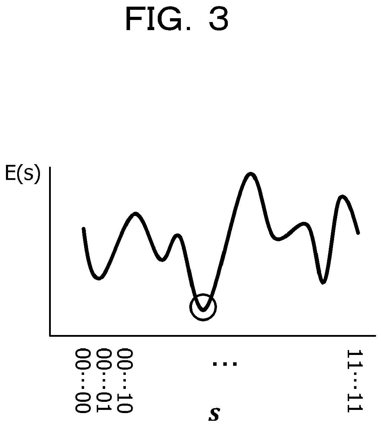

For example, as illustrated in FIG. 3, by searching a combination of bits (s; zero or one) that give a minimum value to the Ising model equation in the QUBO format (searching for part surrounded by circle) described above, it is possible to specify a state of a bit that can optimize the Ising model equation. Note that, in FIG. 3, the vertical axis represents the magnitude of the value of the energy calculated by the Ising model equation (E(s)), and the horizontal axis represents a combination of bits (s).

Then, in the annealing method, because it is possible to obtain a parameter that optimizes the objective function on the basis of the specified state of the bit, it is possible to efficiently optimize the objective function in a short time. If the objective function can be expressed in the QUBO format in this way, the objective function can be converted into the Ising model equation in the QUBO format, and the energy value in the Ising model equation can be efficiently optimized (minimized) by the annealing method in a short time.

In this way, in an example of the technology disclosed in the present case, as the technique of optimizing the objective function equation based on the contribution to the predetermined characteristic, the technique of converting the objective function equation into the Ising model equation in the QUBO format and minimizing the value of the objective function equation converted into the Ising model equation is favorable.

In addition, examples of the processing of converting the objective function equation into the Ising model equation include a technique of expanding and converting the objective function equation using a "for loop" using a self-made program, a technique of converting the objective function equation using a program that can process the mathematical expression itself, and the like, for example.

As the objective function equation converted into the Ising model equation, for example, it is favorable to use an equation represented by the following equation (2). In other words, in an example of the technology disclosed in the present case, it is favorable that the optimization processing unit specifies (optimizes) the shape of the object on the basis of the objective function equation converted into the Ising model equation represented by the following equation (2).

$$E = -\sum_{i,j=0} w_{ij} x_i x_j - \sum_{i=0} b_i x_i \qquad \text{... EQUATION (2)}$$

Note that, in the above-described equation (2),

the E is the objective function equation converted into the Ising model equation,

the $w_{ij}$ is a numerical value that represents an interaction between an i-th bit and a j-th bit,

the $b_i$ is a numerical value that represents a bias with respect to the i-th bit,

the $x_i$ is a binary variable that represents that the i-th bit is zero or one, and

the $x_j$ is a binary variable that represents that the j-th bit is zero or one.

Here, $w_{ij}$ in the above-described equation (2) can be obtained, for example, by extracting the numerical value or the like of each parameter in the objective function equation before being converted into the Ising model equation for each combination of $x_i$ and $x_j$ and is usually a matrix.

The first item on the right side in the above-described equation (2) is obtained by integrating the product of the state (state) and weight value (weight) of two circuits for all of combinations of two states selectable from all the states of bits without omission or duplication.

Furthermore, the second item on the right side in the above-described equation (2) is obtained by integrating the product of the value and state of the bias of each of all the states of bits.

That is, by extracting the parameters of the objective function equation before being converted into the Ising model equation and obtaining $w_{ij}$ and $b_i$, the objective function equation can be converted into the Ising model equation represented by the above-described equation (2).

Moreover, in an example of the technology disclosed in the present case, the objective function equation converted into the Ising model equation as described above can be optimized (minimized) in a short time by, for example, performing the annealing method (annealing) using the annealing machine or the like. That is, in an example of the technology disclosed in the present case, it is favorable that the optimization processing unit specifies (optimizes) the shape of the object by minimizing the objective function equation converted into the Ising model equation by the annealing method.

Examples of the annealing machine used to optimize the objective function equation include a quantum annealing machine, a semiconductor annealing machine using the semiconductor technology, a machine that performs simulated annealing executed by software by using a central processing unit (CPU) or a graphics processing unit (GPU), and the like, for example. Furthermore, for example, Digital Annealer (registered trademark) may be used as the annealing machine.

Note that details of the annealing method using the annealing machine will be described below.

In addition, in an example of the technology disclosed in the present case, it is favorable to perform filtering for the shape the object optimized using the objective function equation based on the contribution. It is favorable to correct a "scattered shape (mottled shape)" that is actually difficult to manufacture to a somewhat continuous shape (to remove small scattered parts or the like) by performing filtering for the optimized shape of the object.

Here, regarding the optimized shape of the object using the objective function equation based on the contribution, there are some cases where the shape in which the objective function equation takes the lowest value becomes a shape in which the material (substance) of the object is scattered in the design region depending on the optimization condition or the like. In this case, the scattered shape is considered to be a shape having the high predetermined characteristic and the high performance in calculation, but it may be difficult to actually manufacture the object. Therefore, it is favorable to correct the object to have the continuous shape by performing the filtering for the shape the object optimized using the objective function equation based on the contribution. In other words, in an example of the technology disclosed in the present case, it is favorable that the optimization processing unit corrects the specified shape of the object to the continuous shape.

Furthermore, it is favorable to perform the correction to the continuous shape each time of repeat in the case of repeating the update of the contribution and the optimization of the shape based on the contribution.

Here, a specific example of the filtering (correction of the shape) will be described.

When performing the filtering, for example, average density is obtained for each element in the design region in consideration of the elements surrounding the each element, and the filtering can be performed on the basis of the obtained average density.

In a technique of performing the filtering based on the average density, for example, an element existing within a radius ($r_{min}$) specified for the e-th element is specified using the following equation using a distance (r).

$$g_j \in S_w^e \ \text{if} \ r_j^e = \left| g_j - g^e \right| \le r_{min}$$

Note that, in the above-described equation, g means coordinates of the center of gravity of the element.

Next, in the technique of performing the filtering based on the average density, the average density of the material weighted by the distance (average of $\rho^e$) is specified by using the following two equations.

$$\overline{\rho^e} = \frac{\sum_{j \in S_w^e} x_j w\left(g_j - g^e\right)}{\sum_{j \in S_w^e} w\left(g_j - g^e\right)}$$

$$w\left(g_j - g^e\right) = \begin{cases} \dfrac{r_{min} - r_j^e}{r_{min}} & if \ g_j \in S_w^e \\ 0 & \text{otherwise} \end{cases}$$

Then, in the technique of performing the filtering based on the average density, the filtering is performed by updating a distribution ($x^e$) of the material in the e-th element according to the magnitude of the average density using the following equation.

$$x^e = \begin{cases} 1 & \overline{\rho^e} \geq 0.5 \\ 0 & \overline{\rho^e} < 0.5 \end{cases}$$

Note that, for a filtering method based on the above-described average density, the method proposed in "Almeida et al. "A simple and effective inverse projection scheme for void distribution control in topology optimization." Struct Multidisc Optim, 39, 359-371 2009." can be used.

Hereinafter, the example of the technology disclosed in the present case will be described in more detail using configuration examples of the device, flowcharts, and the like.

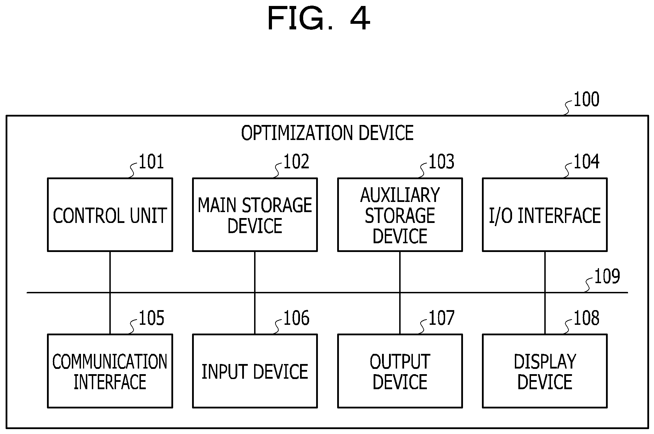

FIG. 4 illustrates a hardware configuration example of the optimization device disclosed in the present case.

In an optimization device 100, for example, a control unit 101, a main storage device 102, an auxiliary storage device 103, an I/O interface 104, a communication interface 105, an input device 106, an output device 107, and a display device 108 are connected to each other via a system bus 109.

The control unit 101 performs arithmetic operations (for example, four arithmetic operations, comparison operations, and arithmetic operations for the annealing method), hardware and software operation control, and the like. The control unit 101 may be, for example, a central processing unit (CPU), a part of the annealing machine used for the annealing method, or a combination thereof.

The control unit 101 realizes various functions, for example, by executing a program (for example, optimization program disclosed in the present case or the like) read in the main storage device 102 or the like.

Processing executed by the optimization processing unit and the contribution specifying unit in the optimization device disclosed in the present case can be executed, for example, by the control unit 101.

The main storage device 102 stores various programs and data or the like needed for executing various programs. As the main storage device 102, for example, a device having at least one of a read only memory (ROM) and a random access memory (RAM) can be used.

The ROM stores various programs, for example, a basic input/output system (BIOS) or the like. Furthermore, the ROM is not particularly limited and can be appropriately selected according to the purpose. For example, a mask ROM, a programmable ROM (PROM), or the like can be exemplified.

The RAM functions, for example, as a work range expanded when various programs stored in the ROM, the auxiliary storage device 103, or the like are executed by the control unit 101. The RAM is not particularly limited and can be appropriately selected according to the purpose. For example, a dynamic random access memory (DRAM), a static random access memory (SRAM), or the like can be exemplified.

The auxiliary storage device 103 is not particularly limited as long as the device can store various information and can be appropriately selected according to the purpose. For example, a solid state drive (SSD), a hard disk drive (HDD), or the like can be exemplified. Furthermore, the auxiliary storage device 103 may be a portable storage device such as a CD drive, a DVD drive, or a Blu-ray (registered trademark) disc (BD) drive.

Furthermore, the optimization device program disclosed in the present case is, for example, stored in the auxiliary storage device 103, loaded into the RAM (main memory) of the main storage device 102, and executed by the control unit 101.

The I/O interface 104 is an interface used to connect various external devices. The I/O interface 104 can input/output data to/from, for example, a compact disc ROM (CD-ROM), a digital versatile disk ROM (DVD-ROM), a magneto-optical disk (MO disk), a universal serial bus (USB) memory (USB flash drive), or the like.

The communication interface 105 is not particularly limited, and a known communication interface can be appropriately used. For example, a communication device using wireless or wired communication or the like can be exemplified.

The input device 106 is not particularly limited as long as the device can receive input of various requests and information with respect to the optimization device 100, a known device can be appropriately used. For example, a keyboard, a mouse, a touch panel, a microphone, or the like can be exemplified. Furthermore, in a case where the input device 106 is a touch panel (touch display), the input device 106 can also serve as the display device 108.

The output device 107 is not particularly limited, and a known device can be appropriately used. For example, a printer or the like can be exemplified.

The display device 108 is not particularly limited, and a known device can be appropriately used. For example, a liquid crystal display, an organic EL display, or the like can be exemplified.

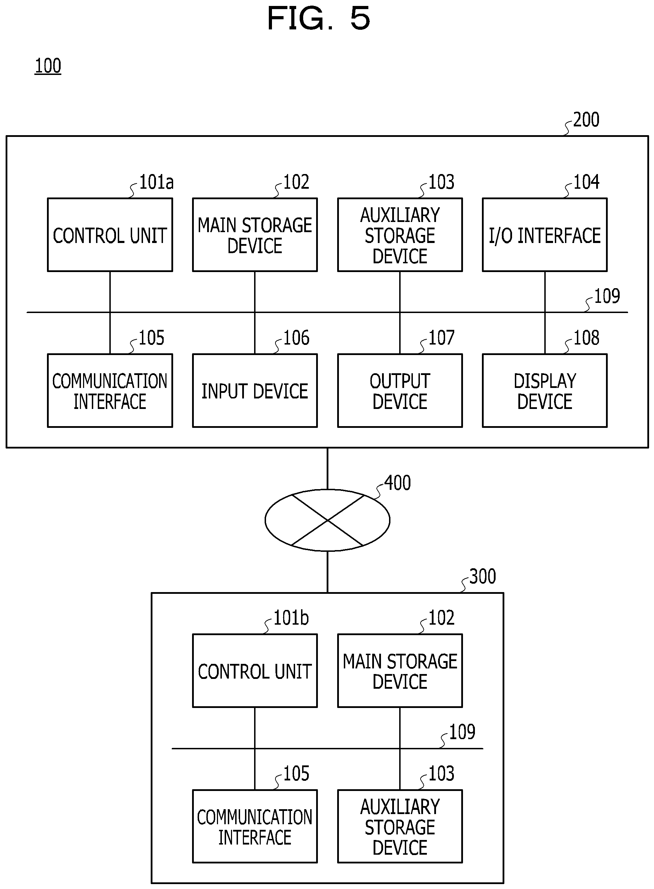

FIG. 5 illustrates another hardware configuration example of the optimization device disclosed in the present case.

In the example illustrated in FIG. 5, the optimization device 100 is divided into a computer 200 that executes processing of specifying contribution, processing of defining an objective function equation, processing of converting the objective function equation into the Ising model equation, and the like, and an annealing machine 300 that optimizes the Ising model equation. Furthermore, in the example illustrated in FIG. 5, the computer 200 and the annealing machine 300 in the optimization device 100 are connected via a network 400.

In the example illustrated in FIG. 5, for example, as a control unit 101a of the computer 200, a CPU or the like can be used, and as a control unit 101b of the annealing machine 300, a device specialized in the annealing method (annealing) can be used.

In the example illustrated in FIG. 5, for example, the computer 200 performs an analysis by the finite element method and specifies the contribution as the function of the contribution specifying unit, sets various settings for defining an objective function equation to define the objective function equation, and converts the defined objective function equation into the Ising model equation. Then, information regarding values of the weight ($w_{ij}$) and the bias ($b_i$) in the Ising model equation is transmitted from the computer 200 to the annealing machine 300 via the network 400.

Next, the annealing machine 300 optimizes (minimize) the Ising model equation on the basis of the received information regarding the values of the weight ($w_{ij}$) and the bias ($b_i$) and obtains the minimum value of the Ising model equation and the state (state) of the bits that give the minimum value. Then, the obtained minimum value of the Ising model equation and the obtained state (state) of the bits that give the minimum value are transmitted from the annealing machine 300 to the computer 200 via the network 400.

Next, the computer 200 obtains the optimized shape of the object and the like on the basis of the received state (state) of the bits that give the minimum value to the Ising model equation.

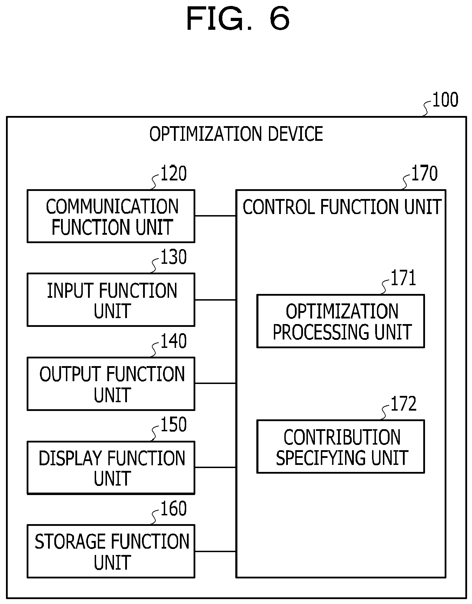

FIG. 6 illustrates an example of a functional configuration of the optimization device disclosed in the present case.

As illustrated in FIG. 6, the optimization device 100 includes a communication function unit 120, an input function unit 130, an output function unit 140, a display function unit 150, a storage function unit 160, and a control function unit 170.

The communication function unit 120, for example, transmits and receives various data to and from an external device. The communication function unit 120 may receive data regarding the bias and the weight in the objective function equation converted into the Ising model equation from the external device, for example.

The input function unit 130, for example, receives various instructions to the optimization device 100. Furthermore, the input function unit 130 may, for example, receive an input of data regarding the bias and the weight in the objective function equation converted into the Ising model equation.

The output function unit 140 prints and outputs, for example, information regarding the optimized shape of the object, and the like.

The display function unit 150 displays, for example, the information regarding the optimized shape of the object on a display, and the like.

The storage function unit 160 stores, for example, various programs, the information regarding the optimized shape of the object, and the like.

The control function unit 170 has an optimization processing unit 171 and a contribution specifying unit 172. The control function unit 170 executes, for example, the various programs stored in the storage function unit 160 and controls the operation of the entire optimization device 100.

The optimization processing unit 171 performs, for example, the processing of specifying (optimizing) the shape of the object, using the objective function equation based on the contribution to the predetermined characteristic of the object.

The contribution specifying unit 172 performs, for example, the processing of specifying the contribution in each element of the object by specifying a distribution of the physical amounts related to the predetermined characteristic by performing an analysis using numerical calculation for the object to be arranged in the design region.

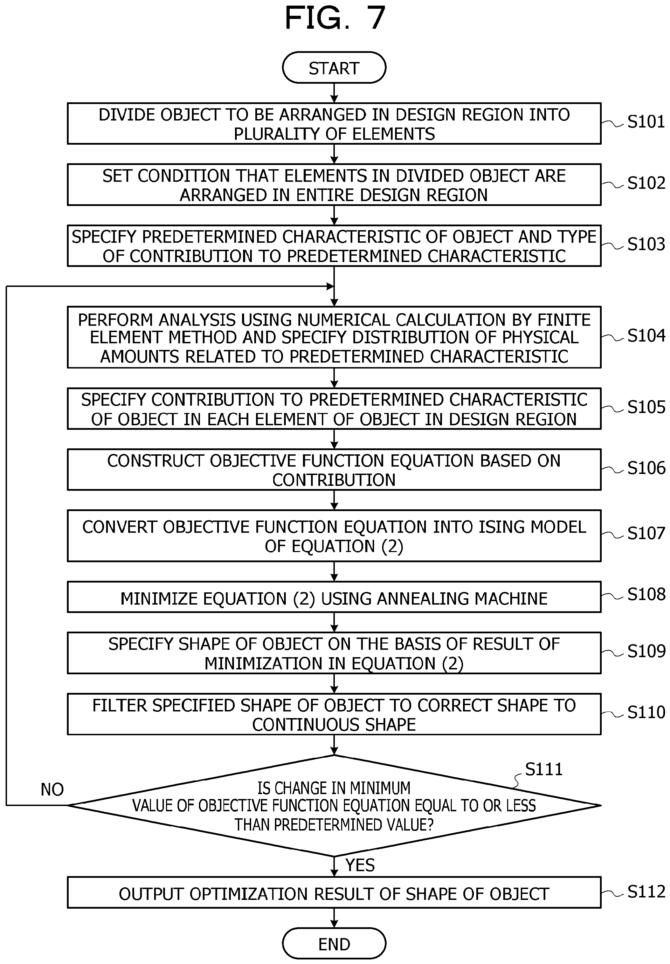

Here, an example of a flow when optimizing the shape of the object using an example of the technology disclosed in the present case will be described with reference to FIG. 7.

First, the optimization processing unit 171 divides the object to be arranged in the design region into a plurality of elements (S101). In other words, in S101, the optimization processing unit 171 prepares the elements obtained by dividing the object to be arranged in the design region.

Next, the optimization processing unit 171 sets a condition that the elements in the divided object are arranged in the entire design region (S102). In other words, in S102, the optimization processing unit 171 sets, for each element of the object in the design region, a variable representing the distribution of the material to satisfy a condition that the material of the object is arranged in all the elements (for example, all of variables x indicating the presence or absence of the material are set to "1").

Next, the optimization processing unit 171 specifies the predetermined characteristic of the object and a type of contribution to the predetermined characteristic (S103). In other words, in S103, the optimization processing unit 171 specifies, for the object for which the shape is to be optimized, the performance to be considered when optimizing the object as the predetermined characteristic, and specifies the physical amount that affects the performance as the contribution, for example.

Next, the contribution specifying unit 172 performs an analysis using numerical calculation by the finite element method and specifies the distribution of the physical amounts regarding the predetermined characteristic (S104). In other words, in S104, the contribution specifying unit 172 specifies the physical amount related to the predetermined characteristic for each element by performing numerical calculation (simulation) by the finite element method for the object divided into the each element in the design region.

Then, the contribution specifying unit 172 specifies the contribution to the predetermined characteristic of the object in each element of the object in the design region (S105). In other words, in S105, the contribution specifying unit 172 specifies the contribution in each element of the object on the basis of the distribution of the physical amounts specified in S104.

Next, the optimization processing unit 171 constructs the objective function equation based on the contribution (S106). In other words, in S106, the optimization processing unit 171 defines the objective function equation based on the contribution to the predetermined characteristic of the object, in each element of the object, on the basis of the contribution specified in S105.

Next, the optimization processing unit 171 converts the objective function equation into the Ising model equation represented by the following equation (2) (S107). In other words, in S107, the optimization processing unit 171 converts the objective function equation into the Ising model equation expressed by the following equation (2) by extracting the parameters in the defined objective function equation and obtaining the $b_i$ (bias) and $w_{ij}$ (weight) in the following equation (2).

$$E = -\sum_{i,j=0} w_{ij}\, x_i x_j - \sum_{i=0} b_i x_i \qquad \text{... EQUATION (2)}$$

Note that, in the above-described equation (2),
the E is the objective function equation converted into the Ising model equation,
the $w_{ij}$ is a numerical value that represents an interaction between an i-th bit and a j-th bit,
the $b_i$ is a numerical value that represents a bias with respect to the i-th bit,
the $x_i$ is a binary variable that represents that the i-th bit is zero or one, and
the $x_j$ is a binary variable that represents that the j-th bit is zero or one.

Next, the optimization processing unit 171 minimizes the above-described equation (2) by using the annealing machine (S108). In other words, in S108, the optimization processing unit 171 specifies the state of the bits that give the minimum value to the objective function equation by calculating the minimum value of the above-described equation (2) by executing ground state search (optimization calculation) using the annealing method regarding the above-described equation (2).

Then, the optimization processing unit 171 specifies the shape of the object on the basis of the result of the minimization of the above-described equation (2) (S109). In other words, in S109, the optimization processing unit 171 specifies the shape of the object of when the objective function equation becomes the minimum value on the basis of the state (state) of the bits that give the minimum value to the above-described equation (2).

Next, the optimization processing unit 171 filters the specified shape of the object to correct the shape to the continuous shape (S110). More specifically, in S110, the optimization processing unit 171 performs the processing of correcting the shape of the object specified in S109 to the continuous shape.

Next, the optimization processing unit 171 determines whether the change in the minimum value of the objective function equation is equal to or less than the predetermined value, and moves the processing to S112 in the case where the change is determined to be equal to or less than the predetermined value or returns the processing to S104 in the case where the change is determined not to be equal to or less than the predetermined value (determined to be equal to or larger than the predetermined value) (Sill). More specifically, in Sill, the optimization processing unit 171 determines, for example, whether a difference ($\Delta E$) between the minimum value of the objective function equation in the n-th calculation and the minimum value of the objective function equation in the (n + 1)th calculation is less than a preset residual ($\varepsilon$). Then, the processing is moved to S112 in the case where $\Delta E$ is determined to be smaller than $\varepsilon$ ($\Delta E < \varepsilon$) or the processing is returned to S104 in the case where $\Delta E$ is determined to be equal to or larger than $\varepsilon$ ($\Delta E \geq \varepsilon$).

Then, the optimization processing unit 171 outputs the optimization result of the shape of the object and terminates the processing (S112). In other words, in S112, the optimization processing unit 171 performs the filtering in S110, outputs the shape of the object of when the change in the minimum value of the objective function equation is equal to or less than the predetermined value as the result of the optimization, and terminates the processing.

Furthermore, in FIG. 7, the flow of the processing in an example of the technology disclosed in the present case has been described according to a specific order. However, in the technology disclosed in the present case, it is possible to appropriately switch an order of each steps in a technically possible range. Furthermore, in the technology disclosed in the present case, a plurality of steps may be collectively performed in a technically possible range.

Examples of the annealing method and the annealing machine will be described below.

The annealing method is a method for probabilistically working out a solution using superposition of random number values and quantum bits. The following describes a problem of minimizing a value of an evaluation function to be optimized as an example. The value of the evaluation function is referred to as energy. Furthermore, in a case where the value of the evaluation function is maximized, the sign of the evaluation function only needs to be changed.

First, a process is started from an initial state in which one of discrete values is assigned to each variable. With respect to a current state (combination of variable values), a state close to the current state (for example, a state in which only one variable is changed) is selected, and a state transition therebetween is considered. An energy change with respect to the state transition is calculated. Depending on the value, it is probabilistically determined whether to adopt the state transition to change the state or not to adopt the state transition to keep the original state. In a case where an adoption probability when the energy goes down is selected to be larger than that when the energy goes up, it can be expected that a state change will occur in a direction that the energy goes down on average, and that a state transition will occur to a more appropriate state over time. Therefore, there is a possibility that an optimum solution or an approximate solution that gives energy close to the optimum value can be obtained finally.

If this is adopted when the energy goes down deterministically and is not adopted when the energy goes up, the energy change decreases monotonically in a broad sense with respect to time, but no further change occurs when reaching a local solution. As described above, since there are a very large number of local solutions in the discrete optimization problem, a state is almost certainly caught in a local solution that is not so close to an optimum value. Therefore, when the discrete optimization problem is solved, it is important to determine probabilistically whether to adopt the state.

In the annealing method, it has been proved that by determining an adoption (permissible) probability of a state transition as follows, a state reaches an optimum solution in the limit of infinite time (iteration count).

In the following, a method for working out an optimum solution using the annealing method will be described step by step.

(1) For an energy change (energy reduction) value ($-\Delta E$) due to a state transition, a permissible probability p of the state transition is determined by any one of the following functions f( ).

$$p(\Delta E, T) = f(-\Delta E / T) \qquad \text{(EQUATION 1-1)}$$

$$f_{metro}(x) = \min(1, e^x) \qquad \text{(METROPOLIS METHOD)(EQUATION 1-2)}$$

$$f_{Gibbs}(x) = \frac{1}{1 + e^{-x}} \qquad \text{(GIBBS METHOD)(EQUATION 1-3)}$$

Here, the reference T is a parameter called a temperature value and can be changed as follows, for example.

(2) The temperature value T is logarithmically reduced with respect to an iteration count t as represented by the following equation.

$$T = \frac{T_0 \log(c)}{\log(t + c)} \qquad \text{(EQUATION 2)}$$

Here, $T_0$ is an initial temperature value, and is desirably a sufficiently large value depending on a problem.

In a case where the permissible probability represented by the equation in (1) is used, if a steady state is reached after sufficient iterations, an occupation probability of each state follows a Boltzmann distribution for a thermal equilibrium state in thermodynamics.

Then, when the temperature is gradually lowered from a high temperature, an occupation probability of a low energy state increases. Therefore, it is considered that the low energy state is obtained when the temperature is sufficiently lowered. Since this state is very similar to a state change caused when a material is annealed, this method is referred to as the annealing method (or pseudo-annealing method). Note that probabilistic occurrence of a state transition that increases energy corresponds to thermal excitation in the physics.

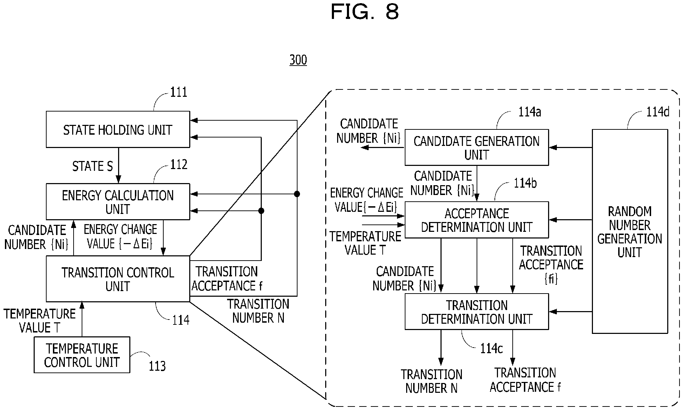

FIG. 8 illustrates an example of a functional configuration of an annealing machine that performs an annealing method. However, in the following description, a case of generating a plurality of state transition candidates is also described. However, a basic annealing method generates one transition candidate at a time.

The annealing machine 300 includes a state holding unit 111 that holds a current state S (a plurality of state variable values). Furthermore, the annealing machine 300 includes an energy calculation unit 112 that calculates an energy change value $\{-\Delta Ei\}$ of each state transition when a state transition from the current state S occurs due to a change in any one of the plurality of state variable values. Moreover, the annealing machine 300 includes a temperature control unit 113 that controls the temperature value T and a transition control unit 114 that controls a state change. Note that the annealing machine 300 can be a part of the optimization device 100 described above.

The transition control unit 114 probabilistically determines whether to accept any one of a plurality of state transitions according to a relative relationship between the energy change value $\{-\Delta Ei\}$ and thermal excitation energy, based on the temperature value T, the energy change value $\{-\Delta Ei\}$, and a random number value.

Here, the transition control unit 114 includes a candidate generation unit 114a that generates a state transition candidate, and an availability determination unit 114b for probabilistically determining whether to permit a state transition for each candidate based on the energy change value $\{-\Delta Ei\}$ and the temperature value T. Moreover, the transition control unit 114 includes a transition determination unit 114c that determines a candidate to be adopted from the candidates that have been permitted, and a random number generation unit 114d that generates a random variable.

The operation of the annealing machine 300 in one iteration is as follows.

First, the candidate generation unit 114a generates one or more state transition candidates (candidate number $\{Ni\}$) from the current state S held in the state holding unit 111 to a next state. Next, the energy calculation unit 112 calculates the energy change value $\{-\Delta Ei\}$ for each state transition listed as a candidate using the current state S and the state transition candidates. The availability determination unit 114b permits a state transition with a permissible probability of the above-described equation (1) according to the energy change value $\{-\Delta Ei\}$ of each state transition using the temperature value T generated by the temperature control unit 113 and the random variable (random number value) generated by the random number generation unit 114d.

Then, the availability determination unit 114b outputs availability $\{fi\}$ of each state transition. In a case where there is a plurality of permitted state transitions, the transition determination unit 114c randomly selects one of the permitted state transitions using a random number value. Then, the transition determination unit 114c outputs a transition number N and transition availability f of the selected state transition. In a case where there is a permitted state transition, a state variable value stored in the state holding unit 111 is updated according to the adopted state transition.

Starting from an initial state, the above-described iteration is repeated while the temperature value is lowered by the temperature control unit 113. When a completion determination condition such as reaching a certain iteration count or energy falling below a certain value is satisfied, the operation is completed. An answer output by the annealing machine 300 is a state when the operation is completed.

The annealing machine 300 illustrated in FIG. 8 may be implemented by using, for example, a semiconductor integrated circuit. For example, the transition control unit 114 may include a random number generation circuit that functions as the random number generation unit 114d, a comparison circuit that functions as at least a part of the availability determination unit 114b, a noise table to be described later, or the like.

Regarding the transition control unit 114 illustrated in FIG. 8, details of a mechanism that permits a state transition at a permissible probability represented in the equation (1) will be further described.

A circuit that outputs one at the permissible probability p and outputs zero at a permissible probability (1 - p) can be achieved by inputting the permissible probability p for input A and a uniform random number that takes a value of a section [0, 1) for input B in a comparator that has the two inputs A and B, outputs one when A > B is satisfied and outputs zero when A < B is satisfied. Therefore, if the value of the permissible probability p calculated based on the energy change value and the temperature value T using the equation in (1) is input to input A of this comparator, the above-described function can be achieved.

This means that, with a circuit that outputs 1 when $f(\Delta E/T)$ is larger than u, in which f is a function used in the equation in (1), and u is a uniform random number that takes a value of the interval [0, 1), the above-described function can be achieved.

Furthermore, the same function as the above-described function can also be achieved by making the following modification.

Applying the same monotonically increasing function to two numbers does not change a magnitude relationship. Therefore, an output is not changed even if the same monotonically increasing function is applied to two inputs of the comparator. If an inverse function $f^{-1}$ of f is adopted as this monotonically increasing function, it can be seen that a circuit that outputs one when $-\Delta E/T$ is larger than $f^{-1}(u)$ can be given. Moreover, since the temperature value T is positive, it can be seen that a circuit that outputs one when -ΔE is larger than Tf⁻¹(u) may be sufficient.

The transition control unit 114 in FIG. 8 is a conversion table that realizes the inverse function $f^{-1}(u)$ and may include a noise table that outputs a value of a next function with respect to an input that is a discretized section [0, 1].

$$f_{metro}^{-1}(u) = \log(u)$$ (EQUATION 3-1)

$$f_{Gibbs}^{-1}(u) = \log\left(\frac{u}{1-u}\right)$$ (EQUATION 3-2)

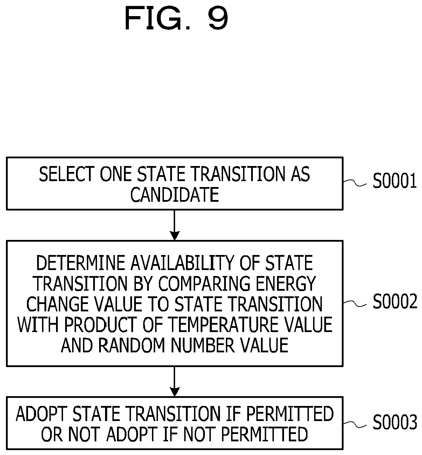

FIG. 9 is a diagram illustrating an example of an operation flow of the transition control unit 114. The operation flow illustrated in FIG. 9 includes a step of selecting one state transition as a candidate (S0001), a step of determining availability of the state transition by comparing an energy change value for the state transition with a product of a temperature value and a random number value (S0002), and a step of adopting the state transition if the state transition is permitted, and not adopting the state transition if the state transition is not permitted (S0003).

(Optimization Method)

An optimization method disclosed in the present case is an optimization method of optimizing a shape of an object, the optimization method including:

an optimization process of specifying the shape of the object by using an objective function equation based on a contribution to a predetermined characteristic of the object in each element of a plurality of elements obtained by dividing the object to be arranged in a design region, and specifying, for the each element of the object, whether to arrange the each element of the object.

The optimization method disclosed in the present case can be performed by, for example, the optimization device disclosed in the present case. Furthermore, a suitable mode in the optimization method disclosed in the present case can be made similar to the suitable mode in the optimization device disclosed in the present case, for example.

(Optimization Program)

An optimization program disclosed in the present case is an optimization program for optimizing a shape of an object, the optimization program for causing a computer to perform processing of specifying the shape of the object by using an objective function equation based on a contribution to a predetermined characteristic of the object in each element of a plurality of elements obtained by dividing the object to be arranged in a design region, and specifying, for the each element of the object, whether to arrange the each element of the object.

The optimization program disclosed in the present case can be, for example, a program that causes a computer to execute the optimization method disclosed in the present case. Furthermore, a suitable mode in the optimization program disclosed in the present case can be made similar to the suitable mode in the optimization device disclosed in the present case, for example.

The optimization program disclosed in the present case can be created using various known programming languages according to the configuration of a computer system to be used, the type and version of the operating system, and the like.

The optimization program disclosed in the present case may be recorded in a recording medium such as a built-in hard disk or an external hard disk, or may be recorded in a recording medium such as a CD-ROM, DVD-ROM, MO disk, or USB memory.

Moreover, in a case where the optimization program disclosed in the present case is recorded in a recording medium as described above, the program can be directly used, or can be installed into a hard disk and then used through a recording medium reader included in the computer system, as needed. Furthermore, the optimization program disclosed in the present case may be recorded in an external storage region (another computer or the like) accessible from the computer system through an information communication network. In the present case, the optimization program disclosed in the present case, which is recorded in the external storage region, can be used directly, or can be installed in a hard disk and then used from the external storage region through the information communication network, as needed.

Note that the optimization program disclosed in the present case may be divided for each of any pieces of processing, and recorded in a plurality of recording media.

(Computer-Readable Recording Medium)

The computer-readable recording medium disclosed in the present case records the optimization program disclosed in the present case.

The computer-readable recording medium disclosed in the present case is not limited to any particular medium and can be appropriately selected according to the purpose. Examples of the computer-readable recording medium include a built-in hard disk, an external hard disk, a CD-ROM, a DVD-ROM, an MO disk, a USB memory, and the like, for example.

Furthermore, the computer-readable recording medium disclosed in the present case may be a plurality of recording media in which the optimization program disclosed in the present case is divided and recorded for each of any pieces of processing.

Examples

Examples of the technology disclosed in the present case will be described. However, the technology disclosed in the present case is not limited to the examples.

Furthermore, in the following examples, as a favorable example in the technology disclosed in the present case, an example in which the object is the magnetic shield, the predetermined characteristic is the shielding performance of the magnetic flux, and the contribution is the magnetization vector will be described.

(Example 1)

As Example 1, the shape of the magnetic shield was optimized using an example of the optimization device disclosed in the present case. In Example 1, optimization of the shape of the magnetic shield was performed according to the flow illustrated in the flowchart in FIG. 7, using the optimization device having the hardware configuration illustrated in FIG. 5. Furthermore, to minimize the objective function equation (minimize the Ising model equation in the equation (2)), the Digital Annealer (registered trademark) was used.

<Specification of Contribution (Magnetization Vector)>

First, in Example 1, optimization considering the area of the magnetic material that forms the magnetic shield in addition to the shielding performance of the magnetic flux as the predetermined characteristic of the magnetic shield (the performance of the magnetic shield) by optimizing the shape of the magnetic shield was performed. More specifically, in Example 1, search for the shape of the magnetic shield was performed, which can minimize the magnetic flux density in the region (object region) where the magnetism is desired to be shielded by the magnetic shield with an as small area as possible of the magnetic material (as a small amount as possible of the material).

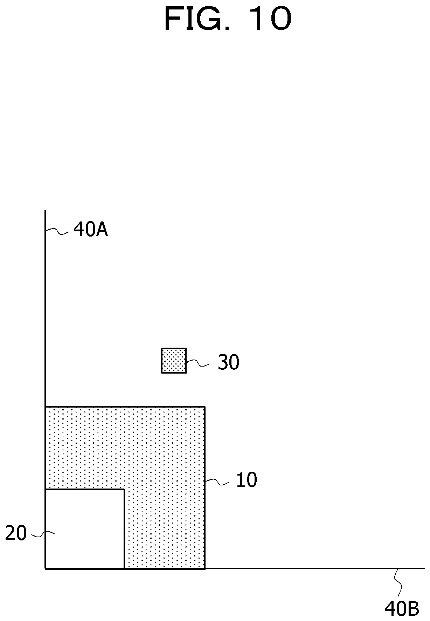

FIG. 10 is a diagram illustrating an example of a calculation model when optimizing the shape of the magnetic shield in Example 1. As illustrated in FIG. 10, in Example 1, an object region 20 that is the region where the magnetism is desired to be shielded by the magnetic shield is located inside a design region 10 that is the region where the magnetic material forming the magnetic shield can be arranged. Furthermore, in Example 1, as illustrated in FIG. 10, a coil 30 (10 kAT (ampere-turn)) that generates the magnetic flux is located above the design region 10. Note that, in Example 1, as illustrated in FIG. 10, a boundary on the left side of the design region 10 and the object region 20 is a symmetric boundary 40A, and a boundary on a lower side of the design region 10 and the object region 20 is a natural boundary 40B.

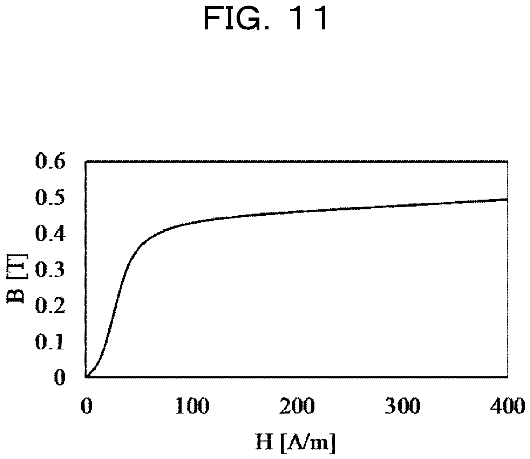

FIG. 11 is a graph illustrating an example of a BH curve (hysteresis curve) for the magnetic material forming the magnetic shield, which is set in

Example 1. In Example 1, the shape of the magnetic shield was optimized for an example of forming the magnetic shield using the magnetic material in which the relationship between magnetic flux density B (T) and a magnetic field (magnetic field) H (A/m) when the magnetic field H is applied to the magnetic material becomes the graph as illustrated in FIG. 11.

Then, in Example 1, an analysis using the finite element method (FEM) was performed for the calculation model illustrated in FIG. 10 as the analysis using numerical calculation (CAE analysis).

Specifically, in Example 1, the distribution of the magnetic flux density was obtained by dividing the calculation model illustrated in FIG. 10 into a plurality of elements, and numerically solving a governing equation for a two-dimensional static magnetic field by the analysis using the finite element method. That is, in Example 1, the magnetic flux density in each element was obtained by performing the analysis using the finite element method for the calculation model divided into the plurality of elements.

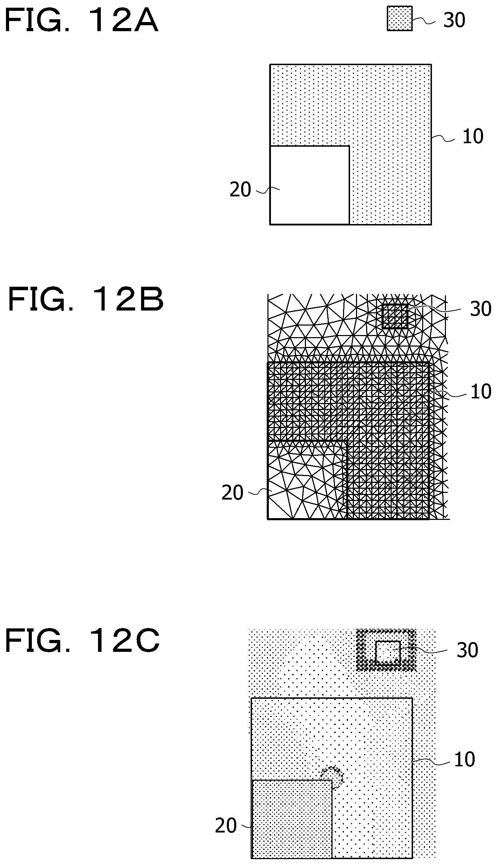

FIGs. 12A to 12C are diagrams for describing an example of a flow when obtaining the magnetic flux density in each element by dividing the calculation model and performing the analysis by the finite element method in Example 1.

First, a calculation model illustrated in FIG. 12A similar to the calculation model illustrated in FIG. 10 was divided as illustrated in FIG. 12B to obtain a set of a plurality of elements. Then, the calculation model divided as illustrated in FIG. 12B was analyzed by the finite element method to obtain the magnetic flux density (B) in each element, and the distribution of the magnetic flux density in the calculation model was specified as illustrated in FIG. 12C.

Note that, in Example 1, as described in S102 of FIG. 7, the condition that the magnetic material as the material of the magnetic shield is arranged in the entire design region 10 in FIG. 12A was set as an initial calculation model for optimizing the shape of the magnetic shield. Furthermore, in Example 1, for each element of the design region 10 divided as illustrated in FIG. 12B, the condition that the magnetic material is arranged in the i-th element is represented as "$x_i$ = 1", and the condition that the magnetic material is arranged in the i-th element is represented as "$x_i$ = 0".

Here, in Example 1, when numerically solving the governing equation for the two-dimensional static magnetic field by the analysis using the finite element method, the following equation was used as the governing equation for the two-dimensional static magnetic field.

$$\mathrm{rot}\left(\frac{1}{\mu}\,\mathrm{rot}A\right) = J_0$$

In the above-described equation, $\mu$ means the magnetic permeability, $J_0$ means the current density in the coil 30, and A means a vector potential.

Note that the magnetic permeability $\mu$ is $\mu_0$ = 4n $\times$ 10$^{-7}$ (H/m) in a region where the magnetic material does not exist (a region where the air exists). Furthermore, the magnetic permeability $\mu$ can be expressed by the following equation in the region where the magnetic material exists (the element in which the magnetic material is arranged in the design region) according to the non-linear characteristics of the BH curve illustrated in FIG. 11.

$$\mu = \frac{B}{H}$$

Then, in Example 1, the vector potential A was obtained by numerically solving the above-described governing equation for the two-dimensional static magnetic field by the analysis using the finite element method (performing simulation by the finite element method). Next, in Example 1, the magnetic flux density (B) in each element was obtained by the following mathematical equation on the basis of the obtained vector potential A, and the distribution of the magnetic flux density in the calculation model (the distribution of the field related to the shielding performance of the magnetic flux) was specified.

$$B = \mathrm{rot}A$$

Next, in Example 1, a magnetization vector M (an example of the contribution) in each element that is a division of the design region was specified on the basis of the specified distribution of the magnetic flux density (B).

Regarding the magnetization vector M in each element, the elements were classified into an element (cell) in which the magnetic material is arranged and an element in which the magnetic material is not arranged (a cell in which the air is arranged) in the design region, and the magnetization vector M was calculated and specified.

For the element in which the magnetic material is arranged, the magnetization vector M was specified on the basis of the following equation.

$$M_i \rightarrow \chi H_i = (\mu_r - 1)H_i = \frac{\mu_r - 1}{\mu_0 \mu_r}B_i$$

Here, in the above-described equation, $M_i$ means the magnetization vector in the i-th element, $H_i$ means magnetic field strength in the i-th element, $\chi$ means a coefficient of the magnetic field strength H, $\mu_r$ means the relative magnetic permeability of the magnetic material, $\mu_0$ means the magnetic permeability of the air, and $B_i$ means the magnetic flux density in the i-th element.

In this way, in Example 1, the magnetization vector M as the contribution of each element was obtained using the relative magnetic permeability $\mu_r$ of the magnetic material, the magnetic permeability $\mu_0$ of the air, and the magnetic flux density B obtained using the finite element method.

Furthermore, for the element in which the magnetic material is not arranged (the element in which the air is arranged), a calculated value of the magnetization vector M becomes zero because the relative magnetic permeability is 1 when using the above-described equation for the magnetization vector $M_i$ in the i-th element. Therefore, in Example 1, as the magnetization vector M of the element in which the magnetic material is not arranged, the magnetization vector M one step before, of when repeating the update of the magnetization vector and the optimization using the objective function equation, is used. That is, in Example 1, in a case where the magnetic material is arranged in the i-th element in the n-th calculation and the magnetic material is not arranged in the i-th element in the (n + 1)th calculation, the magnetization vector M in the i-th element in the (n + 1)th calculation is used as the magnetization vector M in the i-th element in the n-th calculation.

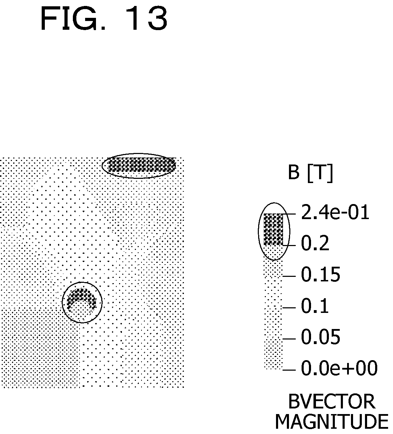

FIG. 13 is a diagram illustrating an example of the distribution of the magnetic flux density in the design region under the condition that the magnetic material as the material of the magnetic shield is arranged in the entire design region in Example 1. FIG. 13 illustrates that the magnetic flux density in the region marked with the circle is large.

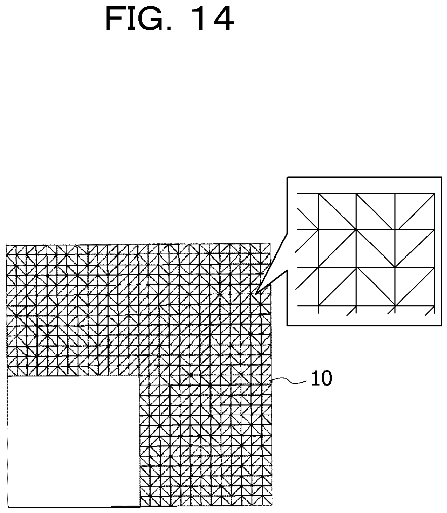

FIG. 14 is a diagram illustrating an example of each element obtained by dividing the magnetic shield in the design region under the condition that the magnetic material as the material of the magnetic shield is arranged in the entire design region in Example 1.

As illustrated in FIG. 14, in Example 1, the magnetic shield in the design region was divided so that the shape of each element of the magnetic shield in the design region 10 is triangular. Note that, in Example 1, the elements (mesh) when performing the analysis using the finite element method for specifying the distribution of the magnetic flux density were used as they are as the elements when specifying whether to arrange each element of the magnetic shield using the objective function equation.

<Construction of Objective Function Equation>

Here, in Example 1, the objective function equation was constructed (defined) as follows in order to perform the search for the shape of the magnetic shield, which can minimize the magnetic flux density in the region (object region) where the magnetism is desired to be shielded by the magnetic shield with an as small area as possible of the magnetic material (as a small amount as possible of the material).

As the objective function equation capable of obtaining the shape of the magnetic shield with as high shielding performance as possible of the magnetic flux and with as small area as possible of the magnetic material, an objective function equation including a term representing the magnitude of the magnetic flux density in the object region 20 and a term representing the area of the magnetic material in the design region 10 is favorable. That is, in an example of the technology disclosed in the present case, it is favorable that the optimization processing unit performs the optimization on the basis of the objective function equation including the term representing the magnitude of the magnetic flux density in the region where the magnetic flux is shielded by the magnetic shield and the term representing the area of the magnetic material in the magnetic shield.

Specifically, in Example 1, the following equation (1) was defined as the objective function equation including the term representing the magnitude of the magnetic flux density in the region where the magnetic flux is shielded by the magnetic shield and the term representing the area of the magnetic material in the magnetic shield on the basis of the magnetization vector M in each element.

$$E = \frac{\alpha}{E_1} \sum_{k=1}^{N_T} (\boldsymbol{B}_k \Delta S_k)^2 + \frac{\beta}{E_2} \sum_{i=1}^{N_D} \Delta S_i x_i$$

... EQUATION (1)

Note that, in the equation (1),
the E is the objective function equation,
the $\alpha$ is a positive number,
the $E_1$ is a numerical value representing a square of the magnetic flux density in the region (object region) where the magnetic flux is shielded in a case where the design region is filled with air,

the $N_T$ is an integer representing the number of elements into which the region where the magnetic flux is shielded is divided, the $B_k$ is a vector representing the magnetic flux density in the k-th element of the region where the magnetic flux is shielded,

the $\Delta S_k$ is a numerical value representing the area of the k-th element of the region where the magnetic flux is shielded,

the $\beta$ is a positive number,

the $E_2$ is a numerical value representing the area of the magnetic material in a case where the design region is filled with the magnetic material, the $N_D$ is an integer representing the number of elements into which the design region is divided,

the $\Delta S_i$ is a numerical value representing the area of the i-th element of the design region, and

the $x_i$ is a binary variable that becomes 1 in a case where the magnetic material is arranged with respect to the i-th element of the design region and becomes 0 in a case where the magnetic material is not arranged and the air is arranged.

In the above-described equation (1), the first item on the right side (the term with the coefficient of $\alpha$) means the square of the magnetic flux density in the object region 20 inside the magnetic shield, and the second item on the right side (the term with the coefficient of $\beta$) means the area of the magnetic material that forms the magnetic shield. Note that the magnetic flux density $B_k$ in the object region in the first item on the right side (the term with the coefficient $\alpha$) was obtained by calculation based on Biot-Savart's law including the magnetization vector M.

By specifying the shape of the magnetic shield that can minimize the value of the above-described equation (1), the shape that can minimize the magnetic flux density in the object region 20 existing inside the magnetic shield with as small area as possible of the magnetic material can be specified.

Furthermore, in the first item on the right side (the term with the coefficient of a), the magnetic flux density $B_k$ in the object region is a vector quantity, so by converting the vector quantity into a scalar quantity by squaring, the format of the objective function equation was converted into the QUBO format.

Note that, in Example 1, $\alpha = 0.95$ and $\beta = 0.05$ were set.

Here, in the above equation (1), the magnetic flux density $B_k$ in the k-th element was obtained by performing a calculation based on Biot-Savart's law using the following equation.

$$B_k = \frac{\mu_0}{2\pi} \sum_{i=1}^{N_D} x_i \left( 2 \frac{M_i \cdot R_{i,k}}{R_{i,k}^4} R_{i,k} - \frac{M_i}{R_{i,k}^2} \right) \Delta S_i + \frac{\mu_0}{2\pi} \sum_{j=1}^{N_C} \frac{J_j \times R_{j,k}}{R_{j,k}^2} \Delta S_j$$

Note that, in the above-described equation,

the $B_k$ is a vector representing the magnetic flux density in the k-th element of the region (object region) where the magnetic flux is shielded, the $\mu_0$ is the magnetic permeability of air,

the $N_D$ is an integer representing the number of elements into which the design region is divided,

the $x_i$ is a binary variable that becomes 1 when the magnetic material is arranged with respect to the i-th element in the design region, and becomes 0 when air is used without arranging the magnetic material, the $M_i$ is the magnetization vector in the i-th element of the design region, the $R_{i,k}$ is a position vector between the k-th element in the region where the magnetic flux is shielded and the i-th element in the design region, the $\Delta S_i$ is a numerical value representing the area of the i-th element in the design region,

the $N_C$ is an integer that represents the number of elements into which the region (coil region) in which the coil is arranged is divided, the $J_j$ is a vector representing the current density in the j-th element of the region where the coil is arranged, and the $\Delta S_j$ is a numerical value representing the area of the j-th element in the region where the coil is arranged.

Then, in Example 1, the above-described objective function equation (equation (1)) is converted into the Ising model equation represented by the following equation (2), and the converted Ising model equation is minimized by using the annealing method (annealing) by the Digital Annealer (registered trademark).

$$E = - \sum_{i,j=0} w_{ij} x_i x_j - \sum_{i=0} b_i x_i$$

... EQUATION (2)

Note that, in the above-described equation (2),

the E is the objective function equation converted into the Ising model equation,

the $w_{ij}$ is a numerical value that represents an interaction between an i-th bit and a j-th bit,

the $b_i$ is a numerical value that represents a bias with respect to the i-th bit, the $x_i$ is a binary variable that represents that the i-th bit is zero or one, and
the $x_j$ is a binary variable that represents that the j-th bit is zero or one.

<Filtering>

In Example 1, the processing of filtering the shape of the magnetic shield obtained by minimizing the objective function equation converted into the Ising model equation using the above-described equation (2), and correcting the shape of the magnetic shield to the continuous shape was performed.

Note that, in Example 1, the above-described technique of obtaining the average density in consideration of the elements around each element and performing filtering on the basis of the obtained average density was used.

Then, in Example 1, the update of the magnetization vector (contribution) and the optimization using the objective function equation based on the updated magnetization vector were repeated until the change in the minimum value of the objective function equation becomes equal to or less than the predetermined value to optimize the shape of the magnetic shield. Note that, in Example 1, the processing of performing filtering each time of repeat to correct the shape of the magnetic shield to the continuous shape was performed.

<Result of Optimization>

The shape of the magnetic shield in the process of repeating the update of the magnetization vector (contribution) and the optimization using the objective function equation based on the updated magnetization vector in Example 1 will be described below.

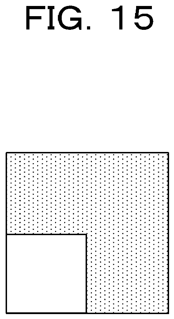

First, Fig. 15 is a diagram illustrating, as an initial shape in performing the optimization in Example 1, an example of the shape of the magnetic shield when setting the condition that the magnetic material as the material of the magnetic shield is arranged in the entire design region.

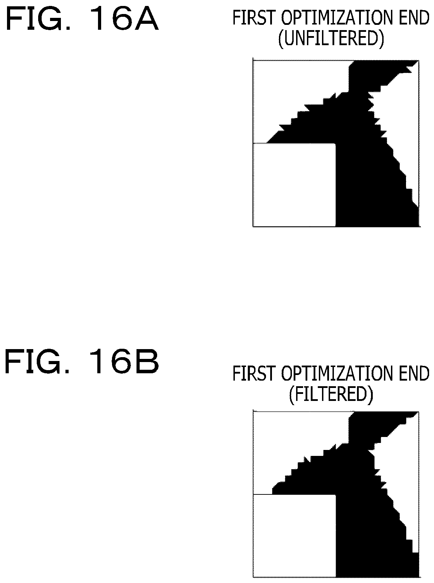

FIG. 16A is a diagram illustrating an example of the shape of the magnetic shield before filtering in the first optimization in Example 1. FIG. 16B is a diagram illustrating an example of the shape of the magnetic shield after filtering in the first optimization in Example 1.

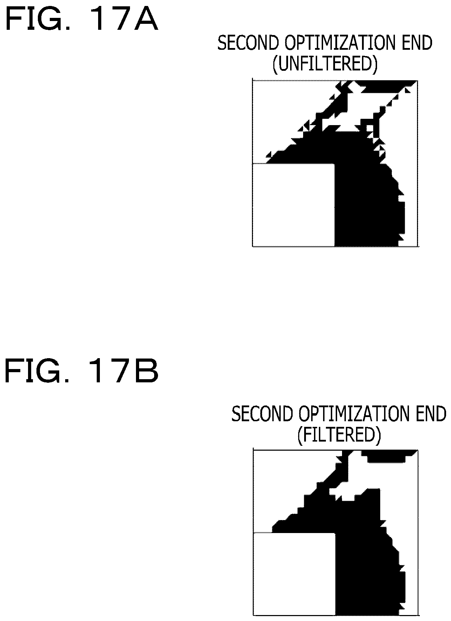

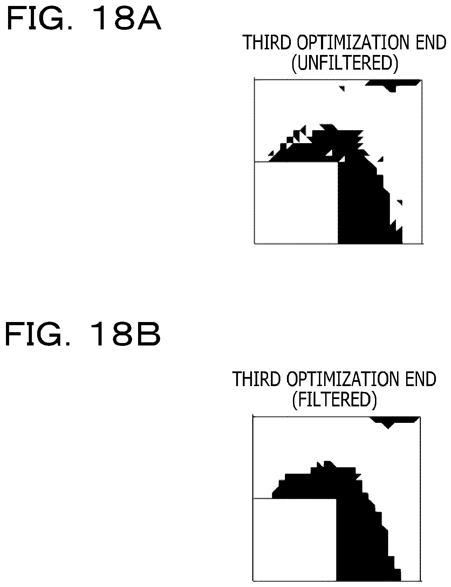

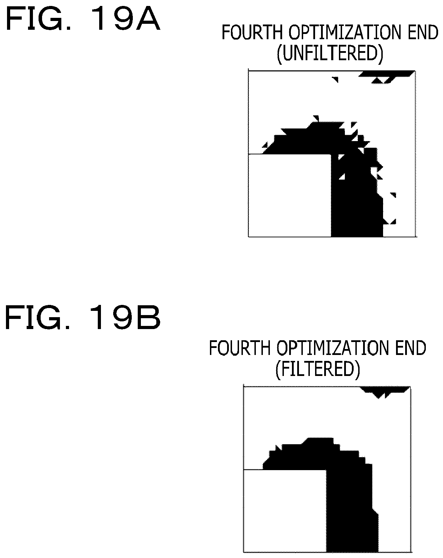

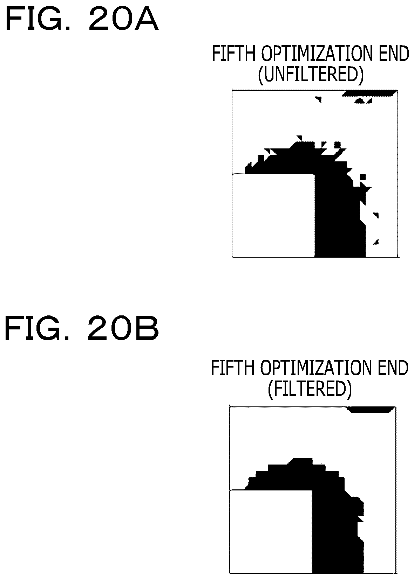

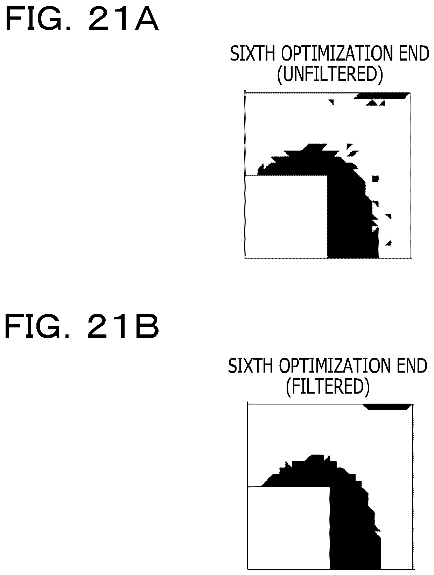

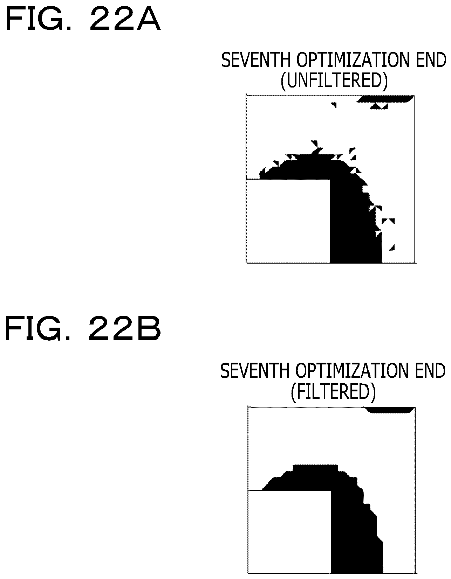

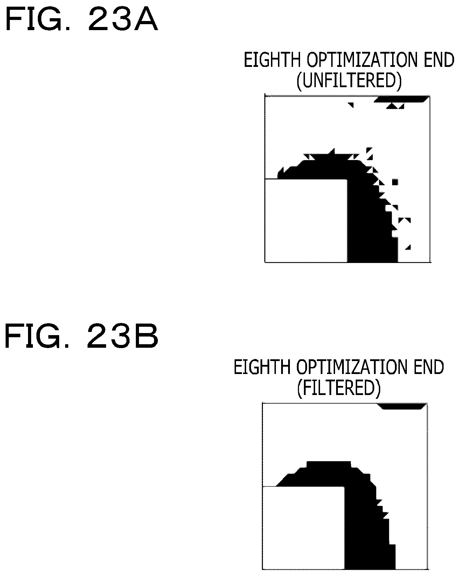

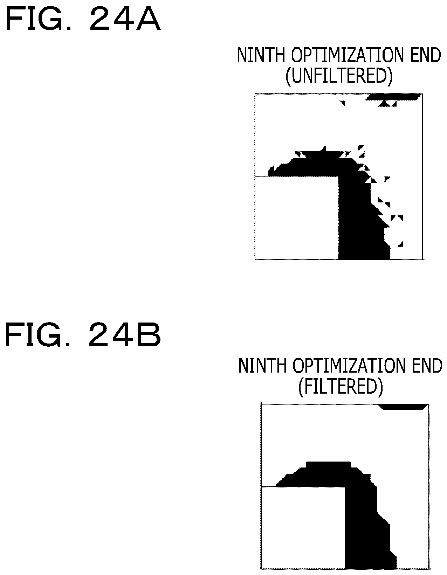

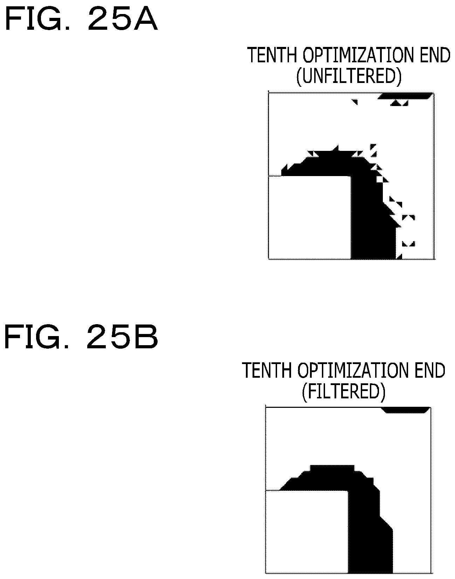

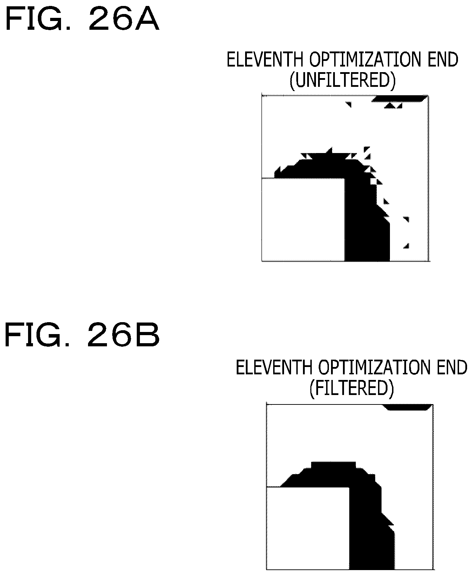

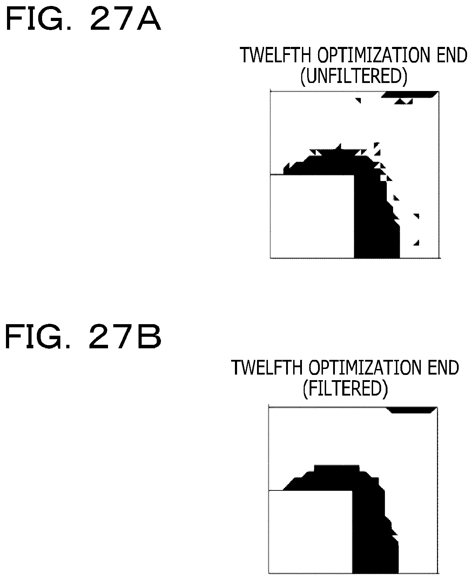

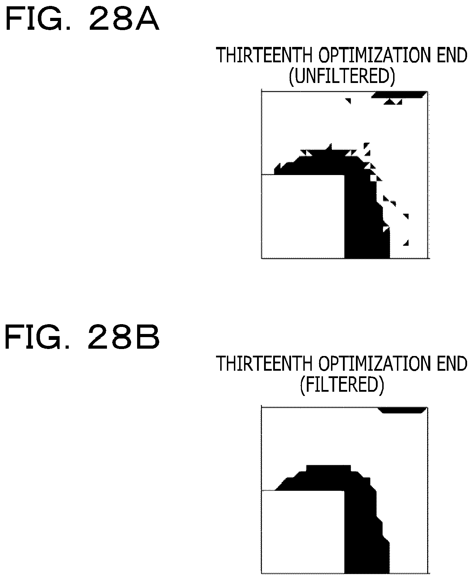

Similarly, an example of the shape of the magnetic shield before filtering and an example of the shape of the magnetic shield after filtering from the second optimization to the fourteenth optimization are illustrated in FIGs. 17A to 29B. Note that, in Example 1, since the change in the minimum value of the objective function equation when the thirteenth optimization was performed and the change in the minimum value of the objective function equation when the fourteenth optimization was performed became equal to or less than the predetermined value, the optimization of the shape of the magnetic shield was terminated in the fourteenth optimization.

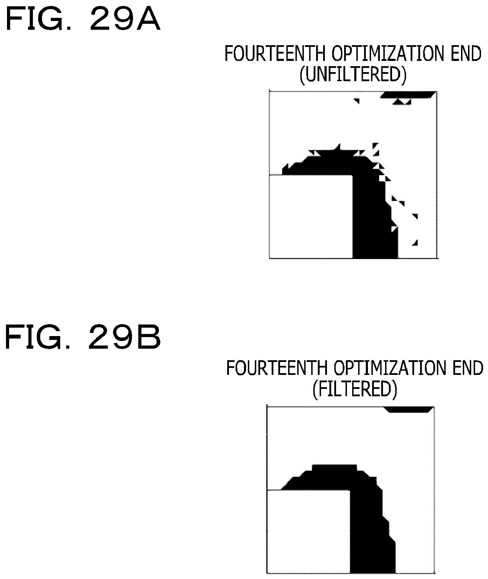

As illustrated in FIGs. 16A to 29B, in the process of fifteen repetitions including the initial shape settings, the shape was gradually changed from a continuous shape with a relatively large area of the magnetic material to a shape with a small area of the magnetic material, and the shape illustrated in FIG. 29B was able to be obtained in the end. Note that, as described above, in the process of fifteen repetitions, specification of the magnetization vector (an example of the contribution) using the finite element method was performed again for the shape obtained by performing filtering after optimization, and the value of the magnetization vector was updated.

Furthermore, as illustrated in FIGs. 16A to 29B, when comparing the shape before filtering and the shape after filtering, it is found that the "scattered shape", which is difficult to manufacture, was corrected to the continuous shape by performing the filtering.

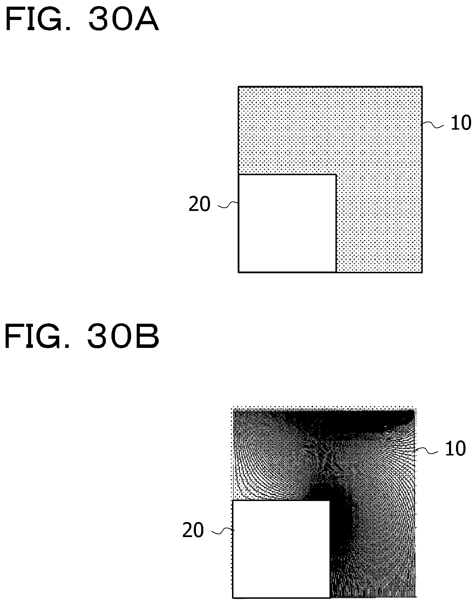

Fig. 30A is a diagram illustrating an example of the shape of the magnetic shield when setting the condition that the magnetic material as the material of the magnetic shield is arranged in the entire design region in Example 1. Fig. 30B is a diagram illustrating an example of lines of magnetic force by magnetism generated by a coil in the shape of the magnetic shield when setting the condition that the magnetic material as the material of the magnetic shield is arranged in the entire design region in Example 1. Note that, in FIGs. 30A and 30B, the magnetic material is illustrated in a light-colored region, and the lines of magnetic force are illustrated in dark-colored lines.

As illustrated in FIGs. 30A and 30B, in the shape of the magnetic shield when setting the condition that the magnetic material as the material of the magnetic shield is arranged in the entire design region, the area of the magnetic material is large but no lines of magnetic force intrude into the object region 20, and the shielding performance of the magnetic flux is high.

Furthermore, the area of the magnetic material in the shapes illustrated in FIGs. 30A and 30B was 0.75 cm$^2$.

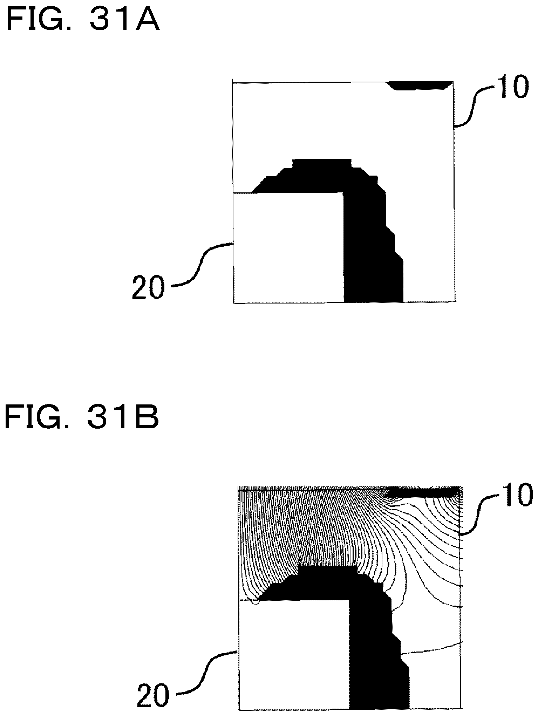

FIG. 31A is a diagram illustrating an example of an optimization result of the shape of the magnetic shield in a case of $\alpha$ = 0.95 and $\beta$ = 0.05 in Example 1. FIG. 31B is a diagram illustrating an example of lines of magnetic force by magnetism generated by a coil in the shape of the optimization result of the magnetic shield in the case of $\alpha$ = 0.95 and $\beta$ = 0.05 in Example 1.

As illustrated in FIGs. 31A and 31B, in the case of setting $\alpha$ = 0.95 and $\beta$ = 0.05 in the equation (1), the area of the magnetic material is significantly smaller than that in the example illustrated in FIGs. 31A and 31B and the area of the magnetic material was 0.19 cm$^2$. Moreover, as illustrated in FIGs. 31A and 31B, in the optimization result of Example 1, although the area of the magnetic material is small as described above, the lines of magnetic force hardly intrude into the object region 20, and the shielding performance of the magnetic flux was able to be sufficiently maintained.

As described above, in Example 1, by optimizing the shape of the magnetic shield, using the objective function equation illustrated in the above-described equation (1), the magnetic flux shielding performance with respect to the object region was sufficient and the shape that can suppress the area of the magnetic material was able to be specified.

(Example 2)

In Example 2, the shape of the magnetic shield was optimized in a similar manner to Example 1 except that $\alpha$ and $\beta$ of the equation (1) were set to $\alpha$ = 0.5 and $\beta$ = 0.5 in Example 1, respectively.

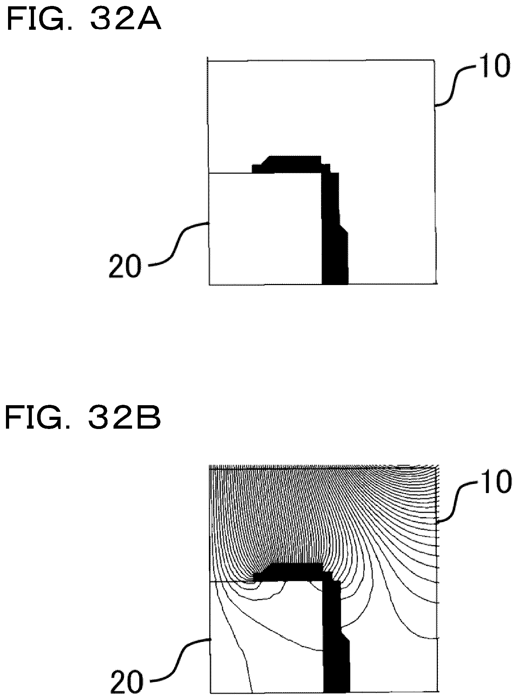

FIG. 32A is a diagram illustrating an example of an optimization result of the shape of the magnetic shield in a case of $\alpha$ = 0.5 and $\beta$ = 0.5 in Example 2. FIG. 32B is a diagram illustrating an example of lines of magnetic force by magnetism generated by a coil in the shape of the optimization result of the magnetic shield in the case of $\alpha$ = 0.5 and $\beta$ = 0.5 in Example 2.

(Example 3)

In Example 3, the shape of the magnetic shield was optimized in a similar manner to Example 1 except that $\alpha$ and $\beta$ of the equation (1) were set to $\alpha$ = 0.7 and $\beta$ = 0.3 in Example 1, respectively.

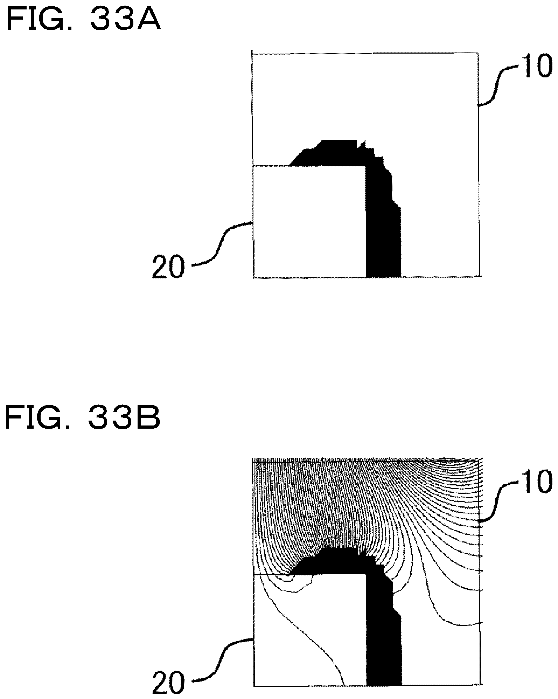

FIG. 33A is a diagram illustrating an example of an optimization result of the shape of the magnetic shield in a case of $\alpha$ = 0.7 and $\beta$ = 0.3 in Example 3. FIG. 33B is a diagram illustrating an example of lines of magnetic force by magnetism generated by a coil in the shape of the optimization result of the magnetic shield in the case of $\alpha$ = 0.7 and $\beta$ = 0.3 in Example 3.

(Example 4)

In Example 4, the shape of the magnetic shield was optimized in a similar manner to Example 1 except that $\alpha$ and $\beta$ of the equation (1) were set to $\alpha$ = 0.8 and $\beta$ = 0.2 in Example 1, respectively.

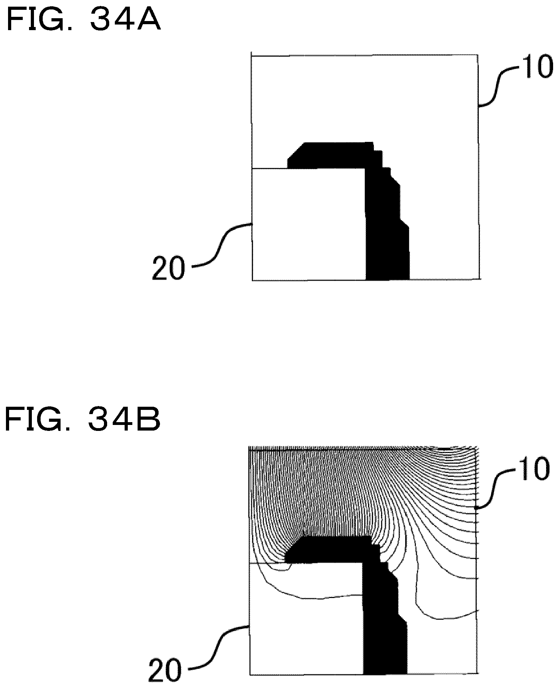

FIG. 34A is a diagram illustrating an example of an optimization result of the shape of the magnetic shield in a case of $\alpha$ = 0.8 and $\beta$ = 0.2 in Example 4. FIG. 34B is a diagram illustrating an example of lines of magnetic force by magnetism generated by a coil in the shape of the optimization result of the magnetic shield in the case of $\alpha$ = 0.8 and $\beta$ = 0.2 in Example 4.

(Example 5)

In Example 5, the shape of the magnetic shield was optimized in a similar manner to Example 1 except that $\alpha$ and $\beta$ of the equation (1) were set to $\alpha$ = 0.99 and $\beta$ = 0.01 in Example 1, respectively.

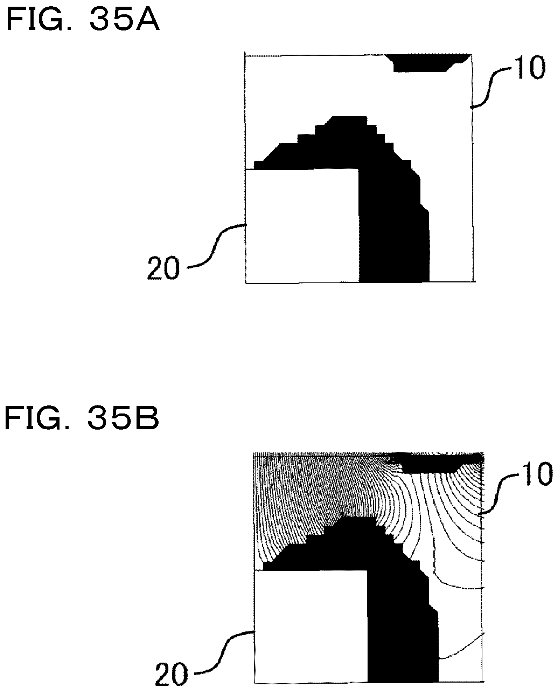

FIG. 35A is a diagram illustrating an example of an optimization result of the shape of the magnetic shield in a case of $\alpha$ = 0.99 and $\beta$ = 0.01 in Example 5. FIG. 35B is a diagram illustrating an example of lines of magnetic force by magnetism generated by a coil in the shape of the optimization result of the magnetic shield in the case of $\alpha$ = 0.99 and $\beta$ = 0.01 in Example 5.

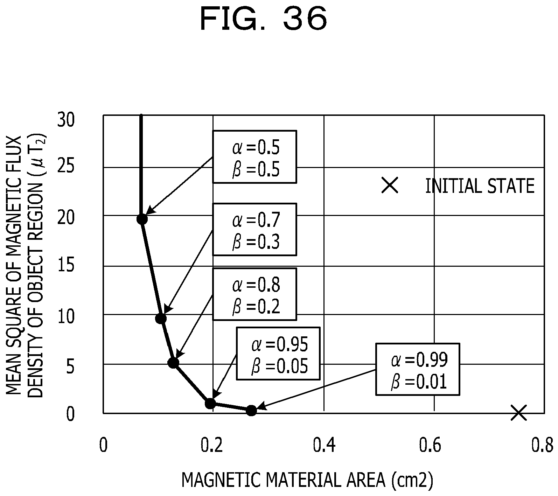

FIG. 36 is a graph illustrating an example of a relationship between a mean square of the magnetic flux density in an object region and an area of the magnetic material (magnetic material area) in Examples 1 to 5.

As illustrated in FIG. 36, in an example of the technology disclosed in the present case, the shape of the magnetic shield can be obtained according to the purpose of optimization by changing the values of $\alpha$ and $\beta$ in the equation (1).

That is, as illustrated in Examples 1 to 5, by changing the values of $\alpha$ and $\beta$ in the equation (1), the balance of the performance of minimizing the magnetic flux density in the object region and the size of the area of the magnetic material to be used can be adjusted for the shape of the magnetic shield to be searched. More specifically, for example, by increasing $\alpha$ and decreasing $\beta$ in the equation (1), the shape putting a high value to the performance of minimizing the magnetic flux density in the object region can be searched. Furthermore, for example, by decreasing $\alpha$ and increasing $\beta$ in the equation (1), the shape putting a high value to suppressing the size of the area of the magnetic material can be searched.

Here, in the examples of the technology disclosed in the present case, the sufficiently optimized shape of the magnetic shield was able to be obtained by the fifteen repetitive calculations, as described above. That is, in the examples of the technology disclosed in the present case, the shape of the magnetic shield was able to be optimized by repeating the numerical calculation (simulation) using the finite element method fifteen times.

Here, in the case of using the continuous topology optimization described as the prior art, if the shape of the magnetic shield is optimized using a calculation system in which a design region similar to the examples of the technology disclosed in the present case is set, it is known that 200 times of calculation by the finite element method is needed. Details regarding this prior art technology example is described in, for example, "SATO, Takahiro, WATANABE, Kota, and IGARASHI, Hajime, "ON LEVELSET AND EVOLUTIONARY ON/OFF METHODS FOR TOPOLOGY OPTIMIZATION IN MAGNETOSTATIC PROBLEMS", Proceedings of Computational Methods in Engineering, vol. 14, pp. 13-18, 2014.".

Furthermore, for example, in the case of using the discrete topology optimization described as the prior art and the number of elements (number of meshes) in the finite element method is n, $2^n$ times of numerical calculation by the finite element method is needed, and the calculation cost exponentially increases with respect to the number of elements in the finite element method.

As described above, in the examples of the technology disclosed in the present case, the number of times of performing the processing with a large calculation cost by the finite element method (an example of the numerical calculation method) can be significantly reduced as compared with the prior art. Therefore, the calculation time can be shortened and the shape can be optimized in a short time.

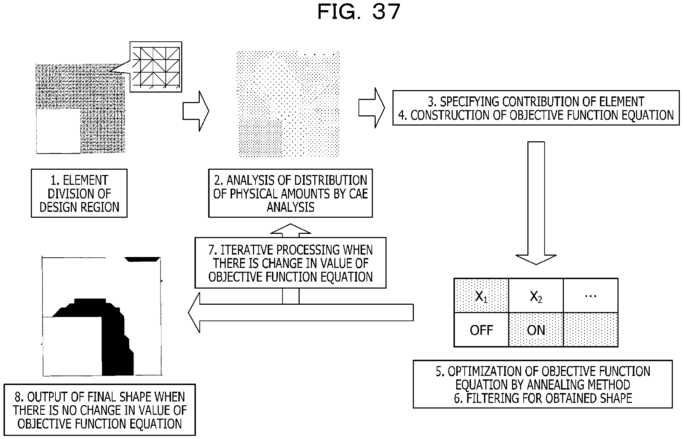

FIG. 37 is a diagram illustrating an example of a flow of processing in one embodiment of the technology disclosed in the present case.

As illustrated in FIG. 37, in one embodiment of the technology disclosed in the present case, first, the object to be arranged in the design region is divided into a set of a plurality of elements ("1. Element division of design region"). Next, in one embodiment of the technology disclosed in the present case, the distribution of the physical amounts for specifying the contribution to the predetermined characteristic of the object is analyzed by performing the CAE analysis for the calculation model including the design region divided into the elements ("2. Analysis of distribution of physical amounts by CAE analysis").

Next, as illustrated in FIG. 37, in one embodiment of the technology disclosed in the present case, the contribution in each element is specified on the basis of the analyzed distribution of the physical amounts ("3. Specifying contribution of element"). Then, in one embodiment of the technology disclosed in the present case, the objective function equation based on the specified contribution is constructed ("4. Construction of objective function equation").

Next, as illustrated in FIG. 37, in one embodiment of the technology disclosed in the present case, the objective function equation is optimized by the annealing method (annealing) ("5. Optimization of objective function equation by annealing method"). Next, in in one embodiment of the technology disclosed in the present case, the shape of the object obtained by optimizing the objective function equation is filtered so as to be the continuous shape ("6. Filtering for obtained shape").

Then, as illustrated in FIG. 37, in in one embodiment of the technology disclosed in the present case, in the case where the change in the minimum value of the objective function equation is equal to or larger than the predetermined value, the processing is performed in "2. Analysis of distribution of physical amounts by CAE analysis", and the iterative processing for obtaining a more appropriate shape is performed ("7. Iterative processing when there is change in value of objective function equation").

Furthermore, in in one embodiment of the technology disclosed in the present case, in the case where the change in the minimum value of the objective function equation is equal to or less than the predetermined value, it is considered that sufficient optimization has been completed, and the result of optimization (the shape of the object) is output ("8. Output of final shape when there is no change in value of objective function equation").

In one embodiment of the technology disclosed in the present case, for example, the shape of the object can be optimized sufficiently and in a short time by performing the processing as illustrated in FIG. 37.

All examples and conditional language provided herein are intended for the pedagogical purposes of aiding the reader in understanding the invention and the concepts contributed by the inventor to further the art, and are not to be construed as limitations to such specifically recited examples and conditions, nor does the organization of such examples in the specification relate to a showing of the superiority and inferiority of the invention. Although one or more embodiments of the present invention have been described in detail, it should be understood that the various changes, substitutions, and alterations could be made hereto without departing from the spirit and scope of the invention.

**Claims**

1. An optimization device that optimizes a shape of an object, the optimization device comprising an optimization processing unit configured to:

obtain an objective function equation based on a contribution to a predetermined characteristic of the object in each element of a plurality of elements, each of the plurality of elements being an element obtained by dividing the object arranged in a design region; and

optimize the shape of the object by determining, for the each element of the object, whether to arrange the each element of the object based on the obtained objective function equation.

2. The optimization device according to claim 1, further comprising a contribution specifying unit configured to:

obtaining a distribution of a physical amount related to the predetermined characteristic by performing an analysis using numerical calculation for the object arranged in the design region; and

obtaining the contribution in the each element of the object by using the obtained distribution of the physical amount.

3. The optimization device according to claim 2, wherein the contribution specifying unit is configured to obtain the contribution in the each element of the object by performing an analysis using a finite element method.

4. The optimization device according to claim 2 or 3, wherein
the contribution specifying unit is configured to update the contribution in the each element of the object on the basis of a specific result as to whether to arrange the each element of the object, and
the optimization processing unit is configured to optimize the shape of the object by using the objective function equation obtained based on the updated contribution.

5. The optimization device according to claim 4, wherein the update of the contribution in the contribution specifying unit and the optimization using the objective function equation on the basis of the updated contribution in the optimization processing unit are repeated until a change in a minimum value of the objective function equation becomes equal to or less than a predetermined value.

6. The optimization device according to any one of claims 1 to 5, wherein the optimization processing unit is configured to convert the optimized shape of the object to a continuous shape.

7. The optimization device according to any one of claims 1 to 6, wherein
the object is a magnetic shield,
the predetermined characteristic is shielding performance of a magnetic flux, and
the contribution is a magnetization vector.

8. The optimization device according to claim 7, wherein
the objective function equation includes a first term and a second term, the first term being a term representing magnitude of magnetic flux density in a region where the magnetic flux is shielded by the magnetic shield, the second term being a term representing an area of a magnetic material in the magnetic shield.

9. The optimization device according to claim 7 or 8, wherein the optimization processing unit is configured to optimize the shape of the object on the basis of the objective function equation represented by a following equation (1):

$$E = \frac{\alpha}{E_1} \sum_{k=1}^{N_T} (\boldsymbol{B}_k \Delta S_k)^2 + \frac{\beta}{E_2} \sum_{i=1}^{N_D} \Delta S_i x_i \quad \text{... EQUATION}$$

(1)

where, in the above-described equation (1),
the E is the objective function equation,
the $\alpha$ is a positive number,
the $E_1$ is a numerical value representing a square of the magnetic flux density in the region where the magnetic flux is shielded in a case where the design region is filled with air,

the $N_T$ is an integer representing the number of elements into which the region where the magnetic flux is shielded is divided,

the $B_k$ is a vector representing the magnetic flux density in the k-th element of the region where the magnetic flux is shielded,

the $\Delta S_k$ is a numerical value representing the area of the k-th element of the region where the magnetic flux is shielded,

the $\beta$ is a positive number,

the $E_2$ is a numerical value representing the area of the magnetic material in a case where the design region is filled with the magnetic material,

the $N_D$ is an integer representing the number of elements into which the design region is divided,

the $\Delta S_i$ is a numerical value representing the area of the i-th element of the design region, and

the $x_i$ is a binary variable that becomes 1 in a case where the magnetic material is arranged with respect to the i-th element of the design region and becomes 0 in a case where the magnetic material is not arranged and air is used.

10. The optimization device according to any one of claims 1 to 9,
wherein
the optimization processing unit is configured to optimize the shape of the object on the basis of the objective function equation converted into an Ising model equation represented by the following equation (2):

$$E = - \sum_{i,j=0} w_{ij} x_i x_j - \sum_{i=0} b_i x_i \qquad \text{... EQUATION (2)}$$

where, in the above-described equation (2),
the E is an objective function equation converted into the Ising model equation,
the $w_{ij}$ is a numerical value that represents an interaction between an i-th bit and a j-th bit,
the $b_i$ is a numerical value that represents a bias with respect to the i-th bit,
the $x_i$ is a binary variable that represents that the i-th bit is zero or one, and
the $x_j$ is a binary variable that represents that the j-th bit is zero or one.

11. The optimization device according to claim 10, wherein the optimization processing unit is configured to optimize the shape of the object by minimizing the objective function equation converted into the Ising model equation by an annealing method.

12. A computer-based optimization method of optimizing a shape of an object, the optimization method comprising:

obtaining an objective function equation based on a contribution to a predetermined characteristic of the object in each element of a plurality of elements, each of the plurality of elements being an element obtained by dividing the object arranged in a design region; and
optimizing the shape of the object by determining, for the each element of the object, whether to arrange the each element of the object based on the obtained objective function equation.

13. An optimization program of optimizing a shape of an object, the program comprising instructions which, when the program is executed by a computer, cause the computer to perform processing, the processing including:

obtaining an objective function equation based on a contribution to a predetermined characteristic of the object in each element of a plurality of elements, each of the plurality of elements being an element obtained by dividing the object arranged in a design region; and
optimizing the shape of the object by determining, for the each element of the object, whether to arrange the each element of the object based on the obtained objective function equation.

FIG. 1A

FIG. 1B

# FIG. 2

| $X_1$ | $X_2$ | ... |
|-------|-------|-----|
| OFF | ON | |

# FIG. 3

# FIG. 4

# FIG. 5

100

200

| 101a | 102 | 103 | 104 |
|------|-----|-----|-----|
| CONTROL UNIT | MAIN STORAGE DEVICE | AUXILIARY STORAGE DEVICE | I/O INTERFACE |

109

| 105 | 106 | 107 | 108 |
|-----|-----|-----|-----|
| COMMUNICATION INTERFACE | INPUT DEVICE | OUTPUT DEVICE | DISPLAY DEVICE |

400

300

| 101b | 102 |
|------|-----|
| CONTROL UNIT | MAIN STORAGE DEVICE |

109

| 105 | 103 |
|-----|-----|
| COMMUNICATION INTERFACE | AUXILIARY STORAGE DEVICE |

# FIG. 6

OPTIMIZATION DEVICE — 100

COMMUNICATION FUNCTION UNIT — 120

CONTROL FUNCTION UNIT — 170

INPUT FUNCTION UNIT — 130

OPTIMIZATION PROCESSING UNIT — 171

OUTPUT FUNCTION UNIT — 140

CONTRIBUTION SPECIFYING UNIT — 172

DISPLAY FUNCTION UNIT — 150

STORAGE FUNCTION UNIT — 160

# FIG. 7

START

DIVIDE OBJECT TO BE ARRANGED IN DESIGN REGION INTO PLURALITY OF ELEMENTS — S101

SET CONDITION THAT ELEMENTS IN DIVIDED OBJECT ARE ARRANGED IN ENTIRE DESIGN REGION — S102

SPECIFY PREDETERMINED CHARACTERISTIC OF OBJECT AND TYPE OF CONTRIBUTION TO PREDETERMINED CHARACTERISTIC — S103

PERFORM ANALYSIS USING NUMERICAL CALCULATION BY FINITE ELEMENT METHOD AND SPECIFY DISTRIBUTION OF PHYSICAL AMOUNTS RELATED TO PREDETERMINED CHARACTERISTIC — S104

SPECIFY CONTRIBUTION TO PREDETERMINED CHARACTERISTIC OF OBJECT IN EACH ELEMENT OF OBJECT IN DESIGN REGION — S105

CONSTRUCT OBJECTIVE FUNCTION EQUATION BASED ON CONTRIBUTION — S106

CONVERT OBJECTIVE FUNCTION EQUATION INTO ISING MODEL OF EQUATION (2) — S107

MINIMIZE EQUATION (2) USING ANNEALING MACHINE — S108

SPECIFY SHAPE OF OBJECT ON THE BASIS OF RESULT OF MINIMIZATION IN EQUATION (2) — S109

FILTER SPECIFIED SHAPE OF OBJECT TO CORRECT SHAPE TO CONTINUOUS SHAPE — S110

IS CHANGE IN MINIMUM VALUE OF OBJECTIVE FUNCTION EQUATION EQUAL TO OR LESS THAN PREDETERMINED VALUE? — S111

NO

YES

OUTPUT OPTIMIZATION RESULT OF SHAPE OF OBJECT — S112

END

FIG. 8

300

# FIG. 9

```
┌─────────────────────────────────┐
│   SELECT ONE STATE TRANSITION AS │ ─╲ S0001
│           CANDIDATE              │
└─────────────────────────────────┘
                 │
                 ▼
┌─────────────────────────────────┐
│   DETERMINE AVAILABILITY OF STATE│
│   TRANSITION BY COMPARING ENERGY │
│   CHANGE VALUE TO STATE TRANSITION│ ─╲ S0002
│  WITH PRODUCT OF TEMPERATURE VALUE│
│       AND RANDOM NUMBER VALUE    │
└─────────────────────────────────┘
                 │
                 ▼
┌─────────────────────────────────┐
│ ADOPT STATE TRANSITION IF PERMITTED│ ─╲ S0003
│   OR NOT ADOPT IF NOT PERMITTED  │
└─────────────────────────────────┘
```

# FIG. 10

# FIG. 11

FIG. 12A

30

10

20

FIG. 12B

30

10

20

FIG. 12C

30

10

20

# FIG. 13

B [T]

— 2.4e-01
— 0.2
— 0.15
— 0.1
— 0.05
— 0.0e+00

BVECTOR
MAGNITUDE

# FIG. 14

10

# FIG. 15

FIG. 16A

FIRST OPTIMIZATION END
(UNFILTERED)

FIG. 16B

FIRST OPTIMIZATION END
(FILTERED)

FIG. 17A

SECOND OPTIMIZATION END
(UNFILTERED)

FIG. 17B

SECOND OPTIMIZATION END
(FILTERED)

FIG. 18A

THIRD OPTIMIZATION END
(UNFILTERED)

FIG. 18B

THIRD OPTIMIZATION END
(FILTERED)

FIG. 19A

FOURTH OPTIMIZATION END
(UNFILTERED)

FIG. 19B

FOURTH OPTIMIZATION END
(FILTERED)

# FIG. 20A

FIFTH OPTIMIZATION END
(UNFILTERED)

# FIG. 20B

FIFTH OPTIMIZATION END
(FILTERED)

FIG. 21A

SIXTH OPTIMIZATION END
(UNFILTERED)

FIG. 21B

SIXTH OPTIMIZATION END
(FILTERED)

FIG. 22A

SEVENTH OPTIMIZATION END
(UNFILTERED)

FIG. 22B

SEVENTH OPTIMIZATION END
(FILTERED)

FIG. 23A

EIGHTH OPTIMIZATION END
(UNFILTERED)

FIG. 23B

EIGHTH OPTIMIZATION END
(FILTERED)

FIG. 24A

NINTH OPTIMIZATION END
(UNFILTERED)

FIG. 24B

NINTH OPTIMIZATION END
(FILTERED)

# FIG. 25A

TENTH OPTIMIZATION END
(UNFILTERED)

# FIG. 25B

TENTH OPTIMIZATION END
(FILTERED)

# FIG. 26A

ELEVENTH OPTIMIZATION END
(UNFILTERED)

# FIG. 26B

ELEVENTH OPTIMIZATION END
(FILTERED)

# FIG. 27A

TWELFTH OPTIMIZATION END
(UNFILTERED)

# FIG. 27B

TWELFTH OPTIMIZATION END
(FILTERED)

FIG. 28A

THIRTEENTH OPTIMIZATION END
(UNFILTERED)

FIG. 28B

THIRTEENTH OPTIMIZATION END
(FILTERED)

FIG. 29A

FOURTEENTH OPTIMIZATION END
(UNFILTERED)

FIG. 29B

FOURTEENTH OPTIMIZATION END
(FILTERED)

FIG. 30A

FIG. 30B

FIG. 31A

FIG. 31B

## FIG. 32A

## FIG. 32B

FIG. 33A

FIG. 33B

FIG. 34A

FIG. 34B

FIG. 35A

FIG. 35B

# FIG. 36

FIG. 37

1. ELEMENT DIVISION OF DESIGN REGION

2. ANALYSIS OF DISTRIBUTION OF PHYSICAL AMOUNTS BY CAE ANALYSIS

3. SPECIFYING CONTRIBUTION OF ELEMENT
4. CONSTRUCTION OF OBJECTIVE FUNCTION EQUATION

7. ITERATIVE PROCESSING WHEN THERE IS CHANGE IN VALUE OF OBJECTIVE FUNCTION EQUATION

| $X_1$ | $X_2$ | ... |
|-------|-------|-----|
| OFF | ON | |

5. OPTIMIZATION OF OBJECTIVE FUNCTION EQUATION BY ANNEALING METHOD
6. FILTERING FOR OBTAINED SHAPE

8. OUTPUT OF FINAL SHAPE WHEN THERE IS NO CHANGE IN VALUE OF OBJECTIVE FUNCTION EQUATION

Europäisches
Patentamt

European
Patent Office

Office européen
des brevets

# EUROPEAN SEARCH REPORT

Application Number

EP 21 18 1409

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/143008 A1 (NEUKART FLORIAN [US] ET AL) 7 May 2020 (2020-05-07) * paragraphs [0004], [0038], [0041], [0045] and [0051] * | 1-13 | INV. G06F17/11 G06N5/00 G06N7/00 G06F30/23 |
| X | DYON VAN VREUMINGEN ET AL: "Quantum-assisted finite-element design optimization", ARXIV.ORG, CORNELL UNIVERSITY LIBRARY, 201 OLIN LIBRARY CORNELL UNIVERSITY ITHACA, NY 14853, 11 August 2019 (2019-08-11), XP081459903, * section 4.1 * | 1-13 | |
| A | MARUO AKITO ET AL: "Optimization of Planar Magnet Array Using Digital Annealer", IEEE TRANSACTIONS ON MAGNETICS, IEEE, USA, vol. 56, no. 3, 13 January 2020 (2020-01-13), pages 1-4, XP011772299, ISSN: 0018-9464, DOI: 10.1109/TMAG.2019.2957805 [retrieved on 2020-02-18] * the whole document * | 1-13 | |
| A | LI XUYOU ET AL: "Design of high shielding effectiveness magnetic shield for fiber optic gyroscope", OPTIK, WISSENSCHAFTLICHE VERLAG GMBH, DE, vol. 198, 29 August 2019 (2019-08-29), XP085837203, ISSN: 0030-4026, DOI: 10.1016/J.IJLEO.2019.163160 [retrieved on 2019-08-29] * the whole document * | 1-13 | |

TECHNICAL FIELDS SEARCHED (IPC)

G06F
G06N

-/--

The present search report has been drawn up for all claims

| Place of search | Date of completion of the search | Examiner |
|---|---|---|
| Berlin | 30 November 2021 | Huguet Serra, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 21 18 1409

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ALFONZETTI S ET AL: "Optimization of the magnetic shield of a levitation melting device", 2017 AEIT INTERNATIONAL ANNUAL CONFERENCE, AEIT, 20 September 2017 (2017-09-20), pages 1-6, XP033280604, DOI: 10.23919/AEIT.2017.8240543 [retrieved on 2017-12-26] * the whole document * ----- | 1-13 | |

|  |  |  | TECHNICAL FIELDS SEARCHED (IPC) |
|---|---|---|---|

The present search report has been drawn up for all claims

| Place of search | Date of completion of the search | Examiner |
|---|---|---|
| Berlin | 30 November 2021 | Huguet Serra, G |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

......................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 21 18 1409

This annex lists the patent family members relating to the patent documents cited in the above-mentioned European search report.
The members are as contained in the European Patent Office EDP file on
The European Patent Office is in no way liable for these particulars which are merely given for the purpose of information.

30-11-2021

| Patent document cited in search report | Publication date | Patent family member(s) | Publication date |
|---|---|---|---|
| US 2020143008 A1 | 07-05-2020 | US 2020143008 A1<br>WO 2020092870 A1 | 07-05-2020<br>07-05-2020 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010108451 A

**Non-patent literature cited in the description**

- **ALMEIDA et al.** A simple and effective inverse projection scheme for void distribution control in topology optimization. *Struct Multidisc Optim,* 2009, vol. 39, 359-371

- **SATO, TAKAHIRO ; WATANABE, KOTA ; IGARASHI, HAJIME.** ON LEVELSET AND EVOLUTIONARY ON/OFF METHODS FOR TOPOLOGY OPTIMIZATION IN MAGNETOSTATIC PROBLEMS. *Proceedings of Computational Methods in Engineering,* 2014, vol. 14, 13-18